# EUROPÄISCHE PATENTSCHRIFT

(11) **EP 1 654 145 B1**
(45) Veröffentlichungstag und Bekanntmachung des Hinweises auf die Patenterteilung: **27.10.2010**
(21) Anmeldenummer: 04766389.3
(22) Anmeldetag: 30.07.2004
(51) Int. Cl.: B60T 8/32, B60T 13/72, B60T 7/04

(54) **BREMSBETÄTIGUNGSEINHEIT ZUR BETÄTIGUNG EINER KRAFTFAHRZ EUGBREMSANLAGE**
BRAKE ACTUATING UNIT FOR ACTUATING A MOTOR VEHICLE BRAKE SYSTEM
UNITE D'ACTIONNEMENT DE FREIN POUR ACTIONNER UN SYSTEME DE FREINAGE D'AUTOMOBILE

(30) Priorität: 06.08.2003 DE 10335924; 19.08.2003 DE 10337949; 07.11.2003 DE 10351991; 07.11.2003 DE 10351992; 10.11.2003 DE 10352364; 13.01.2004 DE 102004001738; 13.01.2004 DE 102004001737; 10.03.2004 DE 102004011622
(43) Veröffentlichungstag der Anmeldung: 10.05.2006
(73) Patentinhaber: Continental Teves AG & Co. oHG, 60488 Frankfurt (DE)
(72) Erfinder: VON HAYN, Holger, 61118 Bad Vilbel (DE); SCHONLAU, Jürgen, 65396 Walluf (DE); RÜFFER, Manfred, 65843 Sulzbach (DE); RITTER, Wolfgang, 61440 Oberursel/Ts. (DE); KRANLICH, Holger, 61184 Karben (DE); GONZALEZ, José, 32549 Bad Oeynhausen (DE); SELLINGER, Thomas, 63073 Offenbach (DE); KLIMES, Milan, Oxford, 48371 MI (US); QUEISSER, Torsten, 02708 Obercunnersdorf (DE); HABER, Michael, 12685 Berlin (DE); VON ALBRICHSFELD, Christian Albrich, 64283 Darmstadt (DE); FEIGEL, Hans-Jörg, 61191 Rosbach (DE)
(86) Internationale Anmeldenummer: PCT/EP2004/051681
(87) Internationale Veröffentlichungsnummer: WO 2005/014351

(56) Entgegenhaltungen:
- EP-A- 0 389 205
- EP-A- 0 486 340
- WO-A-92/18366
- WO-A-94/27847
- WO-A-95/12510
- WO-A-2004/005095
- DE-A- 10 230 865
- DE-A- 19 750 977
- DE-C- 4 208 496
- DE-C- 4 227 777
- JP-A- 9 267 740
- US-A- 5 388 897

## Beschreibung

Die Erfindung betrifft eine Bremsbetätigungseinheit zur Betätigung einer Kraftfahrzeugbremsanlage vom Typ "Brake-by-wire", die aus
a)einem sowohl mittels eines Bremspedals als auch mittels einer elektronischen Steuereinheit fahrerwunschabhängig betätigbaren Bremskraftverstärker, wobei Mittel zur Entkopplung einer kraftübertragenden Verbindung zwischen dem Bremspedal und dem Bremskraftverstärker in der Betriebsart "Brake-by-wire" vorgesehen sind,
b) einem dem Bremskraftverstärker nachgeschalteten Hauptbremszylinder,
c) Mitteln zum Erfassen eines Fahrerverzögerungswunsches, sowie
d) einem mit dem Bremspedal zusammenwirkenden Pedalwegsimulator besteht, durch den in der Betriebsart "Brake-by-wire" eine auf das Bremspedal wirkende Rückstellkraft unabhängig von einer Betätigung des Bremskraftverstärkers simulierbar ist und der in der Betriebsart "Brake-by-wire" bei der Entkopplung der kraftübertragenden Verbindung zwischen dem Bremspedal und dem Bremskraftverstärker zuschaltbar und außerhalb der Betriebsart "Brake-by-wire" abschaltbar ist.

Eine derartige Betätigungseinheit ist aus der DE 197 50 977 A1 bekannt. Der Pedalwegsimulator wirkt bei der vorbekannten Bremsbetätigungseinheit mit einem durch das Bremspedal betätigbaren zweiteiligen Kolben zusammen, dessen Kolbenteile voneinander getrennt sind, so dass in der Betriebsart "Brake-by-wire" deren mechanische Entkopplung realisierbar ist. Auf dem dem Bremspedal zugeordneten ersten Kolbenteil ist ein mit einer Schräge versehenes Bauteil verschiebbar angeordnet, das mit einem weiteren Bauteil in Eingriff bringbar ist, an dem sich eine Simulatorfeder abstützt. Der zweite Kolbenteil steht in kraftübertragender Verbindung mit einer beweglichen Wand des Bremskraftverstärkers. Das Zuschalten des Pedalwegsimulators erfolgt durch den Eingriff des mit der Schräge versehenen Bauteiles mit dem weiteren Bauteil, der der Abstützung der Simulatorfeder dient. In Notfallsituationen, beispielsweise bei einem Stromausfall, wird eine mechanische Verbindung der beiden Kolbenteile hergestellt, wodurch ein Abschalten des Pedalwegsimulators erfolgt.

Als nachteilig wird jedoch bei der vorbekannten Betätigungseinheit empfunden, dass bei hohen Bremspedalantrittsgeschwindigkeiten keine Kraftübertragung zwischen dem ersten Kolbenteil und dem mit der Schräge versehenen Bauteil stattfindet, so dass der Pedalwegsimulator nicht zugeschaltet wird. Außerdem erfolgt bei einem Wechsel von "high-µ" auf "low-µ" ein Entkoppeln des Pedalwegsimulators und ein Ankoppeln des Bremskraftverstärkers an das Bremspedals, so das am Bremspedal Kraftsprünge spürbar sind.

Es ist daher Aufgabe der vorliegenden Erfindung, eine Bremsbetätigungsart der eingangs genannten Gattung vorzuschlagen, bei der ein sicheres Zuschalten des Pedalwegsimulators bei hohen Bremspedalantrittsgeschwindigkeiten gewährleistet ist.

Diese Aufgabe wird erfindungsgemäß durch die in den unabhängigen Patentansprüchen 1, 11 und 36 aufgeführten Merkmale gelöst. Dabei sind die elektromechanischen sowie die elektrohydraulischen Mittel durch die elektronische Steuereinheit ansteuerbar, während die pneumatischen Mittel durch eine im Fahrzeug vorgesehene Unterdruckquelle betätigbar sind.

Bei der im Patentanspruch 1 vorgeschlagenen Lösung erfolgt das Zu- sowie das Abschalten des Pedalwegsimulators durch elektromechanische Mittel, welche durch einen Elektromagneten und einem aus ferromagnetischem Werkstoff ausgebildeten Ring eines Schwenkhebels oder einem mittels des Elektromagneten betätigbaren Arretierungselement gebildet sind, wobei der Pedalwegsimulator eine bewegliche Simulatoreinheit aufweist, die mindestens eine Simulatorfeder aufnimmt und eine Abstützfläche für die Simulatorfeder aufweist bzw. bildet, wobei die Abstützfläche durch die elektromechanischen Mittel in der Betriebsart Brake-by-wire festgehalten wird, so dass die Simulatoreinheit nicht verschiebbar bzw. die Simulatorfeder komprimierbar bzw. verbiegbar ist, und außerhalb der Betriebsart Brake-by-wire freigegeben wird, so dass die Simulatoreinheit verschiebbar bzw. die Simulatorfeder nicht komprimierbar bzw. verbiegbar ist.
Durch diese Maßnahme wird erreicht, dass die gesamte Betätigungskraft in der sog. Rückfallebene (außerhalb der Betriebsart "Brake-by-wire") dem Bremssystem zur Verfügung steht.

Der Schwenkhebel ist vorzugsweise in einem Punkt gelagert, der außerhalb der Längsachse der Simulatorfeder angeordnet ist.

Bei einer anderen vorteilhaften Weiterbildung der vorhin erwähnten Erfindung ist der Schwenkhebel als ein kraftübersetzender Hebel ausgebildet. Durch diese Maßnahme wird erreicht, dass nur eine geringe, vom Elektromagneten aufzubringende Haltekraft bei sehr hohen Simulatorfederkräften erforderlich ist.
Eine variable Anordnung des Pedalwegsimulators wird bei einer weiteren Ausführungsvariante des Erfindungsgegenstandes dadurch ermöglicht, dass der Pedalwegsimulator nicht im Kraftfluss zwischen dem Bremspedal und dem Bremskraftverstärker angeordnet ist.

Eine andere besonders vorteilhafte Ausführung des Erfindungsgegenstandes besteht darin, dass ein zylindrisches Bauteil vorgesehen ist, das mindestens teilweise ein Steuergehäuse des Bremskraftverstärkers, das ein pneumatisches Steuerventil enthält, den Pedalwegsimulator sowie eine den Pedalwegsimulator entgegen seiner Betätigungsrichtung vorspannende Rückstellfeder aufnimmt. Das erwähnte zylindrische Bauteil ist besonders kostengünstig herstellbar und gewährleistet eine gute Führung des Pedalwegsimulators, insbesondere bei dessen translatorischer Bewegung außerhalb der Betriebsart "Brake-by-wire".

Eine ebenfalls kostengünstig herstellbare und sehr zuverlässig arbeitende Ausführungsvariante zeichnet sich dadurch aus, dass die Simulatorfeder als mindestens eine Blattfeder ausgebildet ist, die in einem koaxial zum Bremspedal begrenzt drehbar gelagerten Winkelhebel eingespannt ist und dass die elektromechanischen Mittel durch einen Arm des Winkelhebels sowie das mittels des Elektromagneten betätigbares Arretierungselement gebildet sind, das in der Betriebsart "Brake-by-wire" eine Bewegung des Winkelhebels verhindert. Dabei ist es besonders vorteilhaft, wenn der Winkelhebel mit einem elastischen Dämpfungsmittel versehen ist, das als Anschlag für die Simulatorfeder dient und eine progressive Kennlinie der Simulatorfeder gewährleistet.

Eine andere vorteilhafte Weiterbildung der Erfindung besteht darin, dass der Pedalwegsimulator im Kraftfluss zwischen dem Bremspedal und dem Bremskraftverstärker vorzugsweise koaxial zu diesem, angeordnet ist. Durch diese Maßnahme wird ein Einfluss auf den Bremskraftverstärker dann ermöglicht, wenn bei einem vorliegenden Defekt der Pedalwegsimulator nicht abgeschaltet werden kann.

Bei der im Patentanspruch 11 vorgeschlagenen Lösung erfolgt das Zu- sowie das Abschalten des Pedalwegsimulators durch elektrohydraulische Mittel, welche durch eine mittels eines elektromagnetisch, pneumatisch oder elektropneumatisch betätigbaren Ventils absperrbare hydraulische Zylinder-Kolbenanordnung gebildet sind, und dass der Pedalwegsimulator eine bewegliche Simulatoreinheit aufweist, die mindestens eine Simulatorfeder aufnimmt und eine Abstützfläche für die Simulatorfeder aufweist bzw. bildet, wobei die Abstützfläche direkt oder unter Zwischenschaltung eines Kraftübertragungsglieds bzw. eines begrenzt drehbar gelagerten, zweiarmigen Hebels durch die elektrohydraulischen Mittel in der Betriebsart Brake-by-wire festgehalten wird, so dass die Simulatoreinheit nicht verschwenkbar bzw. die Simulatorfeder komprimierbar bzw. verbiegbar ist, und außerhalb der Betriebsart Brake-by-wire freigegeben wird, so dass die Simulatoreinheit verschwenkbar bzw. die Simulatorfeder nicht komprimierbar bzw. verbiegbar ist.

Durch die Verwendung der elektrohydraulischen Mittel können sehr hohe Betätigungskräfte bei einem geringen Bauraumbedarf aufgenommen werden. Die Kolben-Zylinderanordnung sowie das Kraftübertragungsglied sind vorzugsweise gegenüber der Achse des Bremskraftverstärkers radial versetzt angeordnet. Besonders sinnvoll ist eine Ausführung, bei der die Kolben-Zylinderanordnung im Motorraum des Kraftfahrzeuges angeordnet werden kann. Durch die letztgenannte Maßnahme wird erreicht, dass während sich ein "trockenes" System im Fahrzeuginnenraum befindet, die hydraulischen Komponenten vom Motorraum zugänglich und anbindbar (z. B. an einen Druckmittelvorratsbehälter) sind.

Eine andere sinnvolle Ausführungsvariante der Erfindung sieht vor, dass die Kolben-Zylinderanordnung eine Rückstellfeder aufweist, die das Kraftübertragungsglied gegen die Betätigungsrichtung des Bremspedals vorspannt. Die Rückstellfeder bringt den Pedalwegsimulator nach der Beendigung des Bremsvorgangs in seine Ausgangslage zurück.

Eine andere vorteilhafte Weiterbildung des Erfindungsgegenstandes besteht darin, dass der Bremskraftverstärker ein pneumatischer Bremskraftverstärker ist, der mindestens einen sich durch sein Verstärkergehäuse hindurch erstreckenden Kraftübertragungsbolzen aufweist, der mit einer Durchgangsbohrung versehen ist, die das Kraftübertragungsglied aufnimmt. Durch die Nutzung des ohnehin vorhandenen Kraftübertragungsbolzens zum Spritzwanddurchtritt auch für andere Zwecke ist es möglich, das Flanschbild der Spritzwand weitestgehend unverändert beizubehalten.

Die Simulatorfeder kann als mindestens eine Blattfeder oder mindestens eine Druckfeder ausgebildet sein, die zwischen dem Bremspedal und einem koaxial zum Bremspedal begrenzt drehbar gelagerten Winkelhebel eingespannt ist, der sich am Kraftübertragungsglied abstützt. Dabei kann die Simulatorfeder in der Zylinder-Kolbenanordnung angeordnet sein und sich am Kolben der Zylinder-Kolbenanordnung abstützen. Außerdem können Mittel zum Sensieren der Lage des Kolbens vorgesehen sein. Mit diesen Mitteln wird der Fahrerverzögerungswunsch erfasst. Des weiteren ist eine Abweichung der Null-Lage des Kolbens, z. B. bei einer Leckage, sensierbar, so dass ein Warnhinweis für den Fahrzeugführer angezeigt werden kann.

Eine Optimierung des für den Einbau der erfindungsgemäßen Bremsbetätigungseinheit erforderlichen Bauraums wird dadurch erreicht, dass die Simulatorfeder von einer Simulatoreinheit aufgenommen wird, die gegenüber der Achse des Bremskraftverstärkers radial versetzt angeordnet ist.

Bei einer anderen Ausführung wird die Simulatorfeder von einer Simulatoreinheit aufgenommen, die im Kraftfluss zwischen dem Bremspedal und dem Bremskraftverstärker, vorzugsweise koaxial zu diesem, angeordnet ist. Durch diese Anordnung werden insbesondere Vorteile außerhalb der Betriebsart "Brake-by-wire", beispielsweise bei einem Stromausfall, erreicht, da der Bremskraftverstärker nach einem geringen Weg über die Simulatorfeder betätigt werden kann.

Bei einer anderen Ausführungsvariante ist die Simulatoreinheit als ein hydraulischer Kolben ausgebildet und bildet in einem mindestens die Simulatoreinheit radial umgreifenden Bauteil einen absperrbaren hydraulischen Raum. Der hydraulische Raum ist an einen der Druckräume des Hauptbremszylinders oder einen dem Hauptbremszylinder zugeordneten Druckmittelvorratsbehälter, angeschlossen. Eine derartige Ausführung ist gut entlüftbar. Da geringe Leckagen durch den Druckmittelvorratsbehälter ausgeglichen werden, ist keine Lebensdauerbefüllung mit Druckmittel notwendig. Der hydraulische Raum kann alternativ an einen Niederdruckspeicher angeschlossen sein.

Eine kostengünstig herstellbare Ausführungsvariante sieht vor, dass das vorhin erwähnte Bauteil als ein mindestens teilweise den Bremskraftverstärker radial umgreifender Adapter ausgebildet ist, der der Zufuhr der Luft zum Bremskraftverstärker aus dem Motorraum des Fahrzeuges dient. Da in einen möglicherweise ohnehin vorgesehenen Adapter lediglich nur noch die Hydraulikkomponenten integriert werden müssen, wird durch diese Maßnahme ein Kostenvorteil erreicht.

Der hydraulische Raum ist vorzugsweise mittels des elektromagnetisch, elektropneumatisch oder pneumatisch betätigbaren Ventils absperrbar.

Eine andere vorteilhafte Weiterbildung der Erfindung sieht vor, dass der Pedalwegsimulator durch einen mittels des Bremspedals betätigbaren hydraulischen Geberzylinder sowie einen dem Geberzylinder nachgeschalteten hydraulischen Nehmerzylinder gebildet ist, dessen Kolben durch die Simulatorfeder vorgespannt ist, wobei der Nehmerzylinder über eine mittels eines Ventils absperrbare Verbindung an einen Niederdruckspeicher angeschlossen ist. Die erwähnte Druckmittelübertragung ermöglicht eine frei gestaltbare räumliche Anordnung der Kolben, wobei durch Schalten des Ventils die Rückfallebene erreicht wird. Außerdem wird dadurch eine "natürliche" Hysterese (durch Reibung von Kolbendichtungen) erzeugt, die dem Fahrer ein "normales" Pedalgefühl vermittelt.

Der Pedalwegsimulator ist dabei vorzugsweise in einem mindestens teilweise den Bremskraftverstärker radial umgreifenden Adapter ausgebildet, der der Zufuhr der Luft zum Bremskraftverstärker aus dem Motorraum des Fahrzeuges dient. Außerdem sind vorzugsweise Mittel zum Sensieren der Lage des Nehmerzylinderkolbens vorgesehen. Durch die letztgenannte Maßnahme kann eine eventuelle Leckage im Hydrauliksystem erkannt und damit dem Fahrzeugführer angezeigt werden. Alternativ können Mittel zum Sensieren des im Nehmerzylinder herrschenden Druckes vorgesehen sein.

Bei einer weiteren vorteilhaften Ausführung des Erfindungsgegenstandes wird der Pedalwegsimulator durch eine Simulatorfeder gebildet ist, die zwischen dem Bremspedal und dem begrenzt drehbar gelagerten, zweiarmigen Hebel eingespannt ist, dessen erster Arm die Abstützfläche für die Simulatorfeder bildet und dessen zweiter Arm mit einem hydraulischen Kolben einer Kolben-Zylinderanordnung zusammenwirkt, deren Druckraum über eine absperrbare hydraulische Verbindung an einen hydraulischen Niederdruckspeicher angeschlossen ist.

Der erste Arm weist vorzugsweise einen Durchbruch auf, der bei einer Betätigung des Bremskraftverstärkers außerhalb der Betriebsart "Brake-by-wire" zumindest teilweise das Steuergehäuse des Bremskraftverstärkers umgreift. Durch diese Maßnahme ist eine Lagerung des Bremspedals in der Nähe der Spritzwand möglich. Alternativ kann der zweiarmige Hebel koaxial mit dem Bremspedal oder gegenüber dem Bremspedal versetzt gelagert sein.

Bei der vorhin erwähnten Ausführung ist es besonders sinnvoll, wenn Mittel zur Überprüfung der Beweglichkeit des Kolbens der Kolben-Zylinder-Anordnung vorgesehen sind.

Die Mittel zur Überprüfung der Beweglichkeit des Kolbens sind vorzugsweise durch eine zugkraftübertragende Verbindung zwischen dem Bremspedal und dem Bremskraftverstärker sowie eine den Weg des Kolbens erfassende Sensoreinrichtung gebildet.

Alternativ sind die Mittel zur Überprüfung der Beweglichkeit des Kolbens durch eine Antriebseinheit, die eine vom Bremspedal unabhängige Betätigung des Kolbens der Kolben-Zylinder-Anordnung ermöglicht, sowie eine den Weg des Kolbens erfassende Sensoreinrichtung gebildet. Die Antriebseinheit kann als eine elektromechanische oder pneumatische Antriebseinheit ausgebildet sein.

Bei der im Patentanspruch 36 vorgeschlagenen Lösung erfolgt das Zu- sowie das Abschalten des Pedalwegsimulators durch durch Unterdrück betätigte Mittel, welche durch ein mittels einer Unterdruckdose betätigbares Arretierungselement gebildet sind, wobei der Pedalwegsimulator eine bewegliche Simulatoreinheit aufweist, die mindestens eine Simulatorfeder aufnimmt und eine Abstützfläche für die Simulatorfeder aufweist bzw. bildet, wobei die Abstützfläche durch die pneumatisch betätigbaren Mittel in der Betriebsart Brake-by-wire festgehalten wird, so dass die Simulatoreinheit nicht verschiebbar bzw. die Simulatorfeder komprimierbar bzw. verbiegbar ist, und außerhalb der Betriebsart Brake-by-wire freigegeben wird, so dass die Simulatoreinheit verschiebbar bzw. die Simulatorfeder nicht komprimierbar bzw. verbiegbar ist.

Ein mechanischer Durchgriff mit Wirkung auf den Bremskraftverstärker bei klemmendem Pedalwegsimulatorabschaltsystem wird dadurch erreicht, dass der Pedalwegsimulator im Kraftfluss zwischen dem Bremspedal und dem Bremskraftverstärker, vorzugsweise koaxial zu diesem, angeordnet ist.

Außerdem kann vorzugsweise ein zylindrisches Bauteil vorgesehen sein, das mindestens teilweise ein Steuergehäuse des Bremskraftverstärkers, das ein pneumatisches Steuerventil enthält, den Pedalwegsimulator sowie eine den Pedalwegsimulator entgegen seiner Betätigungsrichtung vorspannende Rückstellfeder aufnimmt.

Um eine genaue Dosierung der Bremskraft zu ermöglichen sieht eine vorteilhafte Weiterbildung der Erfindung vor, dass Mittel zur Erzeugung einer Hysterese vorgesehen sind.

Die Mittel zur Erzeugung der Hysterese sind vorzugsweise durch einen mit dem Bremspedal verbundenen Kraftübertragungshebel sowie ein unter der Wirkung der Simulatorfeder am Kraftübertragungshebel anliegendes Reibglied gebildet, das mit einer Reibfläche zusammenwirkt.

Der Kraftübertragungshebel sowie das Reibglied weisen bei einer vorteilhaften Weiterbildung des Erfindungsgegenstandes schräge Anlageflächen auf, die derart ausgebildet sind, dass bei der Betätigung des Pedalwegsimulators eine Kraftkomponente entsteht, die das Reibglied an die Reibfläche andrückt.

Dabei ist es besonders vorteilhaft, wenn das Reibglied an einem Übersetzungshebel angeordnet sind, der derart am Kraftübertragungshebel abgestützt ist, dass eine Verstärkung der bei der Betätigung des Pedalwegsimulators entstehenden Kraftkomponente, die das Reibglied an die Reibfläche andrückt, erfolgt.

Außerdem sind die Mittel zum Erzeugen der Hysterese vorzugsweise in einem Gehäuse angeordnet, das koaxial zum Bremspedal auf dessen Drehachse schwenkbar gelagert ist, wobei das Gehäuse einen Arm aufweist, der sich an den Mitteln zum Zusowie zum Abschalten des Pedalwegsimulators abstützt.

Schließlich kann es bei vielen Anwendungen im Fahrzeug sinnvoll sein, wenn das Bremspedal verstellbar angeordnet ist.

Weitere Merkmale und Vorteile der Erfindung werden in der nachfolgenden Beschreibung unter Bezugnahme auf die beiliegenden Zeichnungen an mehreren Ausführungsbeispielen näher erläutert. In den Zeichnungen zeigen:
Fig. 1 eine erste Ausführung der erfindungsgemäßen Bremsbetätigungseinheit in Teilschnittdarstellung; bei der das Zu- sowie das Abschalten des Pedalwegsimulators durch elektromechanische Mittel erfolgt;
Fig. 2 den bei der Bremsbetätigungseinheit nach Fig. 1 verwendeten Pedalwegsimulator in größerem Maßstab;
Fig. 3 eine zweite Ausführung der erfindungsgemäßen Bremsbetätigungseinheit in einer der Fig. 1 entsprechenden Darstellung, bei der das Zu- sowie das Abschalten des Pedalwegsimulators durch elektromechanische Mittel erfolgt;
Fig. 4 eine dritte Ausführung der erfindungsgemäßen Bremsbetätigungseinheit in einer der Fig. 1 bzw. 2 entsprechenden Darstellung, bei der das Zu- sowie das Abschalten des Pedalwegsimulators durch elektromechanische Mittel erfolgt;
Fig. 5 eine erste Ausführung der erfindungsgemäßen Bremsbetätigungseinheit in Teilschnittdarstellung, bei der das Zu- sowie das Abschalten des Pedalwegsimulators durch elektrohydraulische Mittel erfolgt;
Fig. 6 eine Teildarstellung einer zweiten Ausführung der erfindungsgemäßen Bremsbetätigungseinheit, bei der das Zusowie das Abschalten des Pedalwegsimulators durch elektrohydraulische Mittel erfolgt;
Fig. 7 eine dritte Ausführung der erfindungsgemäßen Bremsbetätigungseinheit in Teilschnittdarstellung, bei der das Zu- sowie das Abschalten des Pedalwegsimulators durch elektrohydraulische Mittel erfolgt;
Fig. 8a eine vierte Ausführung der erfindungsgemäßen Bremsbetätigungseinheit in Teilschnittdarstellung, bei der das Zu- sowie das Abschalten des Pedalwegsimulators durch elektrohydraulische Mittel erfolgt;
Fig. 8b eine Teilansicht der Bremsbetätigungseinheit gemäß Fig. 8a aus der Richtung "A";
Fig. 9 eine fünfte Ausführung der erfindungsgemäßen Bremsbetätigungseinheit in Teilschnittdarstellung, bei der das Zu- sowie das Abschalten des Pedalwegsimulators durch elektrohydraulische Mittel erfolgt;
Fig. 10 eine sechste Ausführung der erfindungsgemäßen Bremsbetätigungseinheit in Teilschnittdarstellung, bei der das Zu- sowie das Abschalten des Pedalwegsimulators durch elektrohydraulische Mittel erfolgt;
Fig. 11 eine siebente Ausführung der erfindungsgemäßen Bremsbetätigungseinheit in Teilschnittdarstellung, bei der das Zu- sowie das Abschalten des Pedalwegsimulators durch elektrohydraulische Mittel erfolgt;
Fig. 12 eine achte Ausführung der erfindungsgemäßen Bremsbetätigungseinheit in Teilschnittdarstellung, bei der das Zu- sowie das Abschalten des Pedalwegsimulators durch elektrohydraulische Mittel erfolgt;
Fig. 13 ein Schnitt entlang der Schnittlinie A - A durch die Bremsbetätigungseinheit gemäß Fig. 12;
Fig. 14a eine neunte Ausführung der erfindungsgemäßen Bremsbetätigungseinheit in Teilschnittdarstellung, bei der das Zu- sowie das Abschalten des Pedalwegsimulators durch elektrohydraulische Mittel erfolgt;
Fig. 14b eine Teilansicht der Bremsbetätigungseinheit gemäß Fig. 14a aus der Richtung "A";
Fig. 15 und 16 eine zehnte sowie eine elfte Ausführung der erfindungsgemäßen Bremsbetätigungseinheit in Teilschnittdarstellung, bei der das Zu- sowie das Abschalten des Pedalwegsimulators durch elektrohydraulische Mittel erfolgt;
Fig. 17 und 18 eine zwölfte sowie eine dreizehnte Ausführung der erfindungsgemäßen Bremsbetätigungseinheit in Teilschnittdarstellung, bei der das Zu- sowie das Abschalten des Pedalwegsimulators durch elektrohydraulische Mittel erfolgt; ung
Fig. 19 eine Ausführung der erfindungsgemäßen Bremsbetätigungseinheit in Teilschnittdarstellung, bei der das Zu- sowie das Abschalten des Pedalwegsimulators durch unterdruckbetätigte Mittel erfolgt.

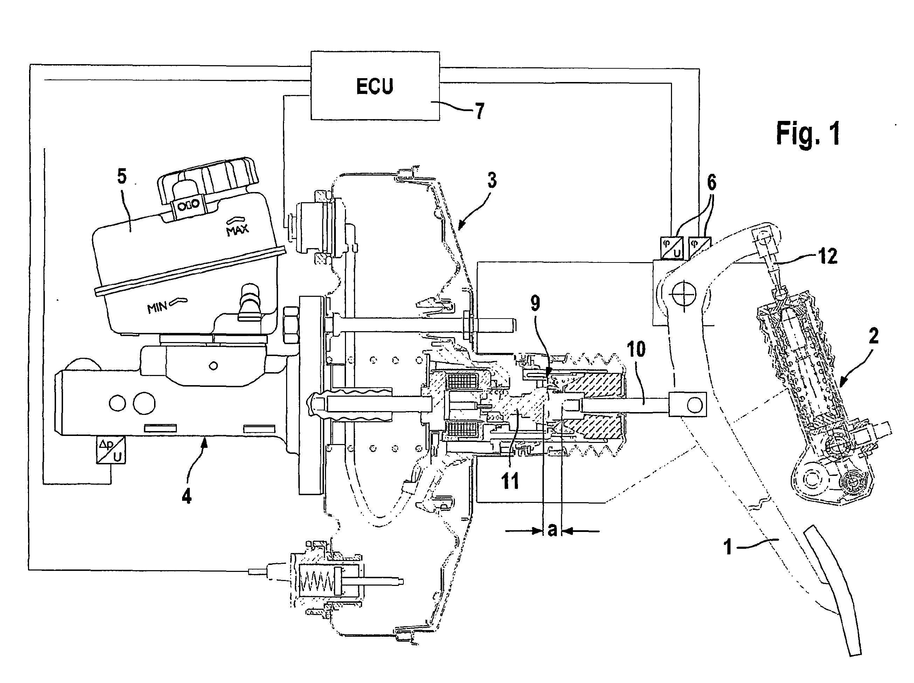

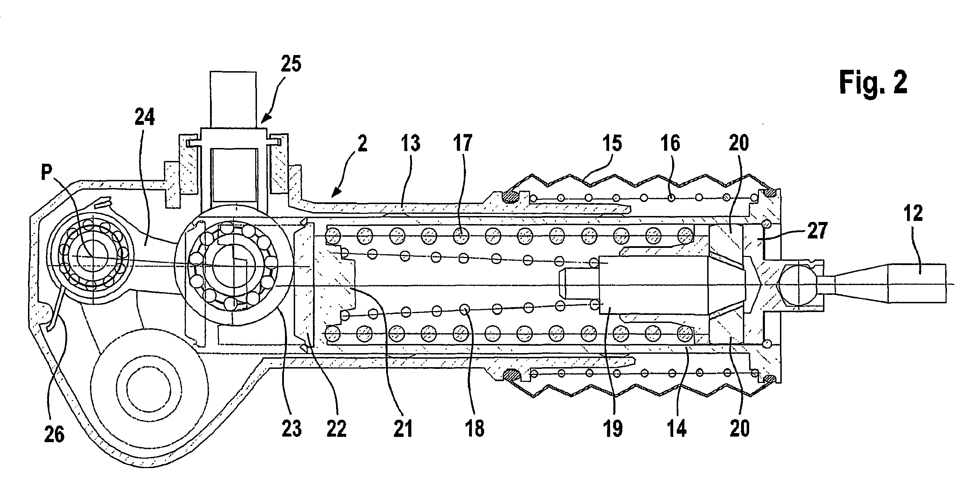

Die in Fig. 1 in einer Teilschnittdarstellung gezeigte Bremsbetätigungseinheit zur Betätigung einer Kraftfahrzeugbremsanlage vom Typ "Brake-by-wire" besteht im Wesentlichen aus einem Bremskraftverstärker, vorzugsweise einem Unterdruckbremskraftverstärker 3, einem dem Bremskraftverstärker 3 nachgeschalteten Hauptbremszylinder, vorzugsweise einem Tandemhauptzylinder 4, an dessen nicht dargestellte Druckräume nicht gezeigte Radbremsen eines Kraftfahrzeugs angeschlossen sind, einem dem Hauptbremszylinder 4 zugeordneten Druckmittelvorratsbehälter 5, einem Bremspedal 1 zur Betätigung des Bremskraftverstärkers 3 durch den Fahrer, einem mit dem Bremspedal 1 insbesondere in der Betriebsart "Brake-by-wire" zusammenwirkenden Pedalwegsimulator 2, der dem Fahrer das gewöhnliche Bremspedalgefühl vermittelt, mindestens einer Sensoreinrichtung 6 zur Erfassung eines Fahrerverzögerungswunsches, sowie einer elektronischen Steuereinheit 7, durch deren Ausgangssignale u. a. ein dem Bremskraftverstärker 3 zugeordneter Elektromagnet 8 ansteuerbar ist, der eine vom Fahrerwillen unabhängige Betätigung eines pneumatischen Steuerventils 9 ermöglicht, das eine Luftzufuhr zum Bremskraftverstärker 3 steuert. Ein zwischen dem Ende einer mit dem Bremspedal 1 gekoppelten Kolbenstange 10 und einem Steuerkolben 11 des vorhin genannten Steuerventils 9 vorgesehener axialer Spalt "a" gewährleistet eine Entkopplung der kraftübertragenden Verbindung zwischen dem Bremspedal 1 und dem Bremskraftverstärker 3 in der Betriebsart "Brake-by-wire". Der Pedalwegsimulator 2, durch den, wie bereits erwähnt, in der Betriebsart "Brake-by-wire" eine auf das Bremspedal wirkende Rückstellkraft unabhängig von einer Betätigung des Bremskraftverstärkers 3 simulierbar ist, ist derart ausgeführt, dass er in der Betriebsart "Brake-by-wire" bei der Entkopplung der kraftübertragenden Verbindung zwischen dem Bremspedal 1 und dem Bremskraftverstärker 3 zuschaltbar und außerhalb der Betriebsart "Brake-by-wire" abschaltbar ist. Die Betätigung des Pedalwegsimulators 2 erfolgt mittels eines am Bremspedal 1 angelenkten Betätigungsgliedes 12. Das Zu- sowie das Abschalten des Pedalwegsimulators 2 erfolgt bei der gezeigten Ausführung durch elektromechanische Mittel, die im Zusammenhang mit Fig. 2 näher erläutert werden.

Wie insbesondere Fig. 2 zu entnehmen ist, weist der Pedalwegsimulator 2 ein teilweise zylindrisches äußeres Gehäuse 13 sowie eine rohrförmige Simulatoreinheit 14 auf, die im äußeren Gehäuse 13 verschiebbar geführt ist. Das aus dem äußeren Gehäuse 13 herausragende Teil der Simulatoreinheit 14 wird von einem elastischen Faltenbalg 15 umgriffen, während zwischen dem Gehäuse 13 und der Simulatoreinheit 14 eine Rückstellfeder 16 angeordnet ist, die der Rückstellung der Simulatoreinheit 14 dient. Die rohrförmige Simulatoreinheit 14 nimmt eine erste Simulatorfeder 17, eine koaxial mit der ersten Simulatorfeder 17 angeordnete zweite Simulatorfeder 18, ein mit dem Betätigungsglied 12 in Verbindung stehendes Kraftübertragungsglied 27 sowie Mittel bzw. Bauteile 19, 20 auf, die der Erzeugung einer Hysterese durch Aufbringen von Reibkräften dienen. Die Mittel 19, 20 zur Erzeugung der Hysterese sind derart ausgebildet, dass mit steigendem Hub des Pedalwegsimulators 2 zusätzlich zur Kraft der Simulatorfedern 17, 18 die genannten Reibkräfte erzeugt werden, die der am Bremspedal 1 wirkenden Betätigungskraft entgegen wirken, und bestehen aus einem im Kraftübertragungsglied 18 verschiebbar geführten, mit einer konischen Fläche versehenen zylindrischen **Teil** 19 sowie aus mindestens zwei Reibsegmenten 20, die mit der Innenwand der Simulatoreinheit 14 zusammenwirken und Schrägen aufweisen, die mit der konischen Fläche des zylindrischen Teiles 19 in Eingriff gebracht werden. Die beiden Simulatorfedern 17, 18 stützen sich mit einem Ende an einer die Simulatoreinheit 14 verschließenden Wand 21 ab. Das andere Ende der radial außen liegenden Simulatorfeder 17 stützt sich am vorhin erwähnten Kraftübertragungsglied 27 ab, während das andere Ende der radial innen liegenden Simulatorfeder 18 sich am zylindrischen Teil 19 abstützt und somit dieses Teil 19 entgegen der Betätigungsrichtung des Pedalwegsimulators 2 vorspannt.

Wie Fig. 2 weiterhin zu entnehmen ist, liegt die die Simulatoreinheit 14 verschließende Wand 21 über eine vorzugsweise gehärtete Metallplatte 22 an einer Abstützfläche 23 an, die an einem im äußeren Gehäuse 13 begrenzt drehbar gelagerten Schwenkhebel 24 ausgebildet ist. Der Drehpunkt P, in dem der Schwenkhebel 24 gelagert ist, ist gegenüber der Längsachse der Simulatoreinheit 14 radial versetzt angeordnet. Die vorhin erwähnte Abstützfläche 23 ist dabei vorzugsweise durch die Oberfläche eines am Schwenkhebel 24 drehbar gelagerten Ringes aus ferromagnetischem Werkstoff gebildet, der durch Aktivieren eines Elektromagneten 25 in der in der Zeichnung dargestellten Position gehalten wird. Eine am Schwenkhebel 24 wirkende Schenkelfeder 26 übt auf den Schwenkhebel 24 ein links drehendes Moment aus, das bei einem Ausfall des Elektromagneten 25 durch die am Betätigungsglied 12 eingeleitete Kraft überwunden wird, so dass der Schwenkhebel 24 in die in der Zeichnung gestrichelt angedeutete Position gebracht wird und somit der axiale Weg für die Simulatoreinheit 14 bzw. die die Simulatorfedern 17, 18 abstützende Wand 21 freigegeben und der Pedalwegsimulator 2 abgeschaltet wird. Der Schwenkhebel 24 bzw. die Abstützfläche 22 bilden zusammen mit dem Elektromagneten 25 die im Zusammenhang mit Fig. 1 erwähnten elektromechanischen Mittel. Der Pedalwegsimulator 2 befindet sich in dem in Fig. 1 gezeigten Ausführungsbeispiel nicht im Kraftfluss zwischen dem Bremspedal 1 und dem Bremskraftverstärker 3.

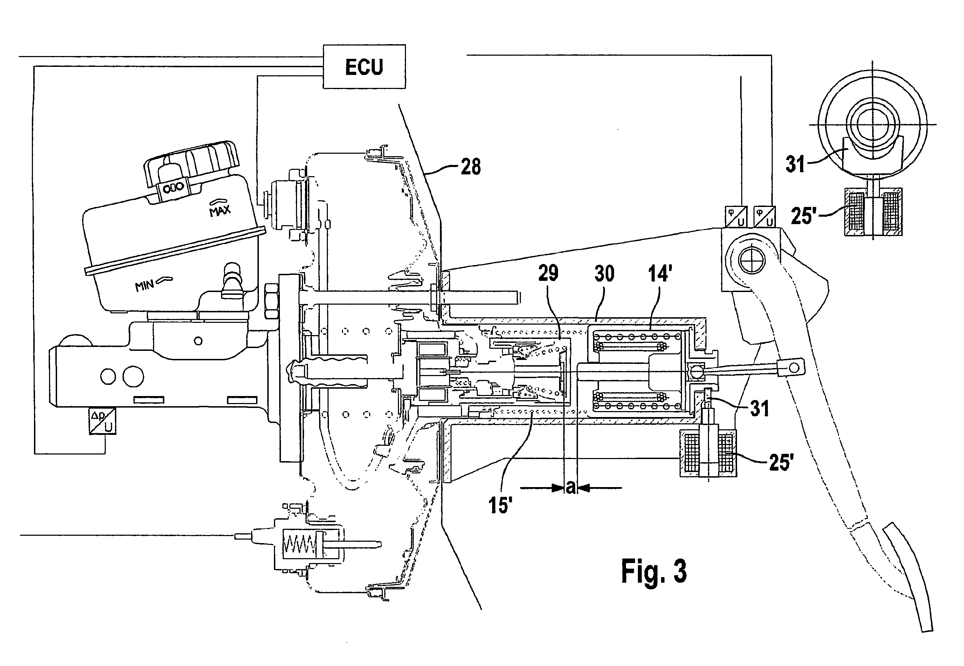

Bei der in Fig. 3 dargestellten zweiten Ausführung ist der Pedalwegsimulator 2 im Kraftfluss zwischen dem Bremspedal 1 und dem Bremskraftverstärker 3 koaxial zu diesem angeordnet. Die vorhin erwähnte Simulatoreinheit, die in Fig. 3 mit dem Bezugszeichen 14' bezeichnet wird, ist dabei in einem zylindrischen Bauteil 30 verschiebbar gelagert, das an einer Spritzwand 28 des Fahrzeuges befestigt ist und das mindestens teilweise ein Steuergehäuse 29 des Bremskraftverstärkers 3 umgreift, das ein nicht näher bezeichnetes pneumatisches Steuerventil enthält. Das zylindrische Bauteil 30 nimmt außerdem die vorhin erwähnte, die Simulatoreinheit 14' entgegen ihrer Betätigungsrichtung vorspannende Rückstellfeder 15 auf. Die elektromechanischen Mittel sind durch die Simulatoreinheit 14' sowie einen mittels eines Elektromagneten 25' betätigbares Arretierungselement bzw. einen Querschieber 31 gebildet, der in der Betriebsart "Brake-by-wire" die Simulatoreinheit 14' fest hält und außerhalb der Betriebsart "Brake-by-wire", beispielsweise bei einem Stromausfall, diese freigibt, so dass sie im zylindrischen Bauteil 30 verschoben werden kann und nach dem Schließen des im Zusammenhang mit Fig. 1 erwähnten Spaltes "a" eine Kraftübertragung zwischen dem Bremspedal 1 und einem das Steuerventil des Bremskraftverstärkers 3 betätigenden Ventilkolben stattfindet.

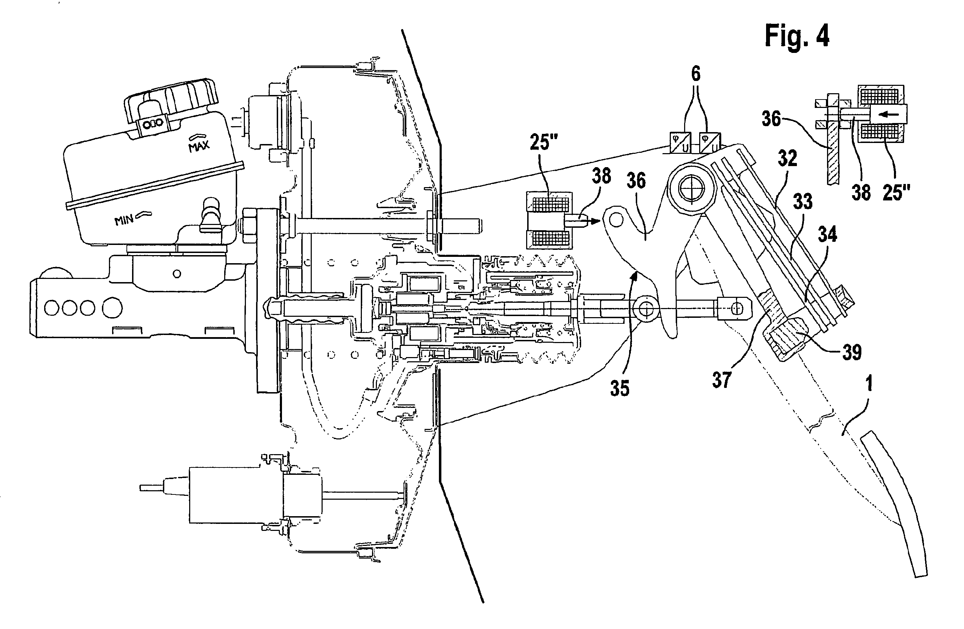

Bei der in Fig. 4 dargestellten dritten Ausführung des Erfindungsgegenstandes wird der Pedalwegsimulator 2 im Wesentlichen durch Blattfedern 32, 33, 34 gebildet, die in einem Winkelhebel 35 eingespannt sind. Der Winkelhebel 35 ist koaxial zum Bremspedal 1 begrenzt drehbar gelagert und weist zwei Arme 36, 37 auf. Die elektromechanischen Mittel sind im gezeigten Beispiel durch den kürzeren Arm 36 des Winkelhebels 35 sowie ein mittels eines in der Zeichnung um 90° gedreht dargestellten Elektromagneten 25" betätigbares Arretierungselement 38 gebildet, das in der Betriebsart "Brake-by-wire" den Winkelhebel 35 blockiert und somit seine Bewegung verhindert. Der längere Arm 37 des Winkelhebels 35 ist mit einem elastischen Block 39 versehen, der einen Anschlag für die Blattfedern 32 - 34 bildet.

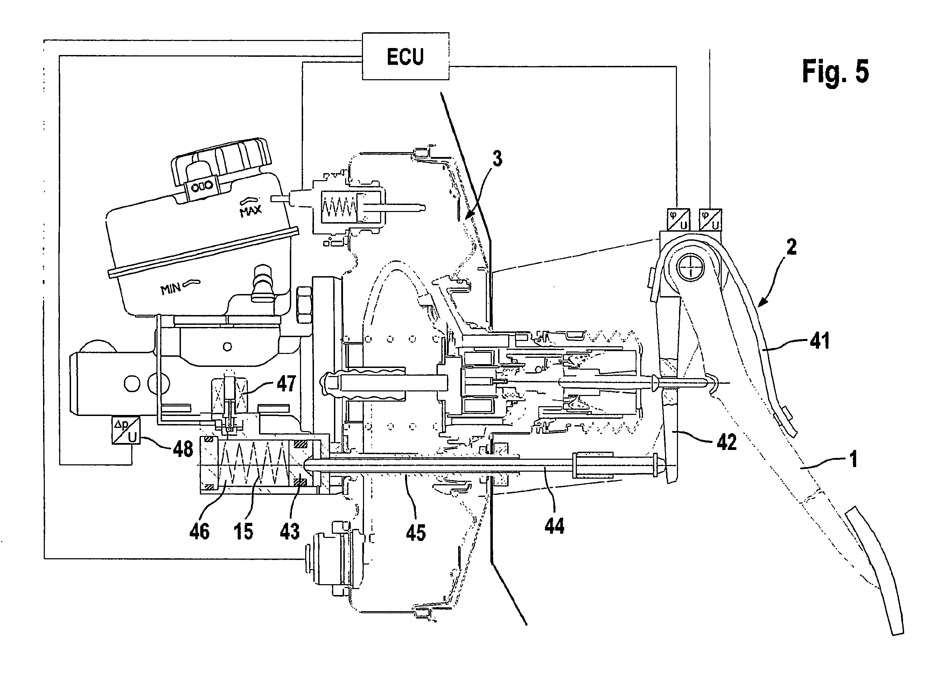

Wie bereits oben erwähnt wurde, zeigen die Figuren 5 bis 14 vorteilhafte Weiterbildungen der erfindungsgemäßen Betätigungseinheit, bei denen das Zu- sowie das Abschalten des Pedalwegsimulators 2 durch elektrohydraulische Mittel erfolgt, die im Wesentlichen durch eine mittels eines elektromagnetisch, pneumatisch oder elektropneumatisch betätigbaren Ventils absperrbare hydraulische Zylinder-Kolbenanordnung 40 gebildet sind. Bei der in Fig. 5 gezeigten ersten Ausführung dieser Art dient als Pedalwegsimulator 2 eine Blattfeder 41, die einerseits am Bremspedal 1 und andererseits an einem koaxial zum Bremspedal 1 gelagerten Winkelhebel 42 befestigt ist. Zwischen einem Kolben 43 der Zylinder-Kolbenanordnung 40 und dem Winkelhebel 42 ist ein Kraftübertragungsglied 44 vorgesehen, das sich durch den Bremskraftverstärker 3 hindurch erstreckt.

Wie der Zeichnung zu entnehmen ist, ist der Bremskraftverstärker 3 ein pneumatischer Unterdruckbremskraftverstärker, der mindestens einen sich durch sein Verstärkergehäuse hindurch erstreckenden Kraftübertragungsbolzen 45 aufweist. Der Kraftübertragungsbolzen 45 weist eine Durchgangsbohrung auf, die das Kraftübertragungsglied 44 aufnimmt. Die Kolben-Zylinderanordnung 40 sowie das Kraftübertragungsglied 44 sind gegenüber der Achse des Bremskraftverstärkers 3 radial versetzt angeordnet, wobei die Kolben-Zylinderanordnung 40 im Motorraum des Kraftfahrzeuges angeordnet ist. Die im Zusammenhang mit den vorher gehenden Ausführungen erwähnte Rückstellfeder 15 ist im dargestellten Beispiel in der Kolben-Zylinderanordnung 40 angeordnet und spannt ihren Kolben 43 entgegen der Betätigungsrichtung des Bremspedals 1 vor. Der Kolben 43 begrenzt einen hydraulischen Raum 46, der an den vorhin erwähnten Druckmittelvorratsbehälter 5 angeschlossen ist. In der Verbindung zwischen dem hydraulischen Raum 46 und dem Druckmittelvorratsbehälter 5 ist ein elektromagnetisch schaltbares Ventil 47 eingefügt, das ein Absperren der genannten Verbindung ermöglicht. Ein dem Hauptbremszylinder 4 zugeordneter Drucksensor 48 dient zusätzlich zum Wegsensor 6 der Erfassung des Fahrerverzögerungswunsches.

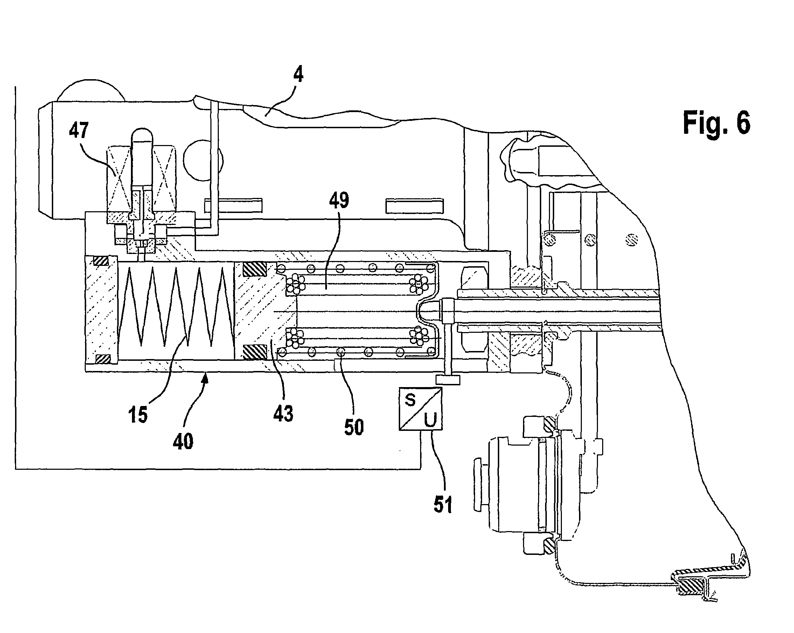

Der Aufbau der in Fig. 6 gezeigten Ausführung entspricht weitgehend dem der Ausführung gemäß Fig. 5. Der Pedalwegsimulator 2 wird jedoch durch zwei koaxial zueinander angeordnete Druckfedern 49, 50 gebildet, die in der oben erwähnten Kolben-Zylinderanordnung 40 integriert sind. Ein mit dem Bezugszeichen 51 bezeichneter Wegsensor 52 dient der Erfassung der Simulatorbewegung.

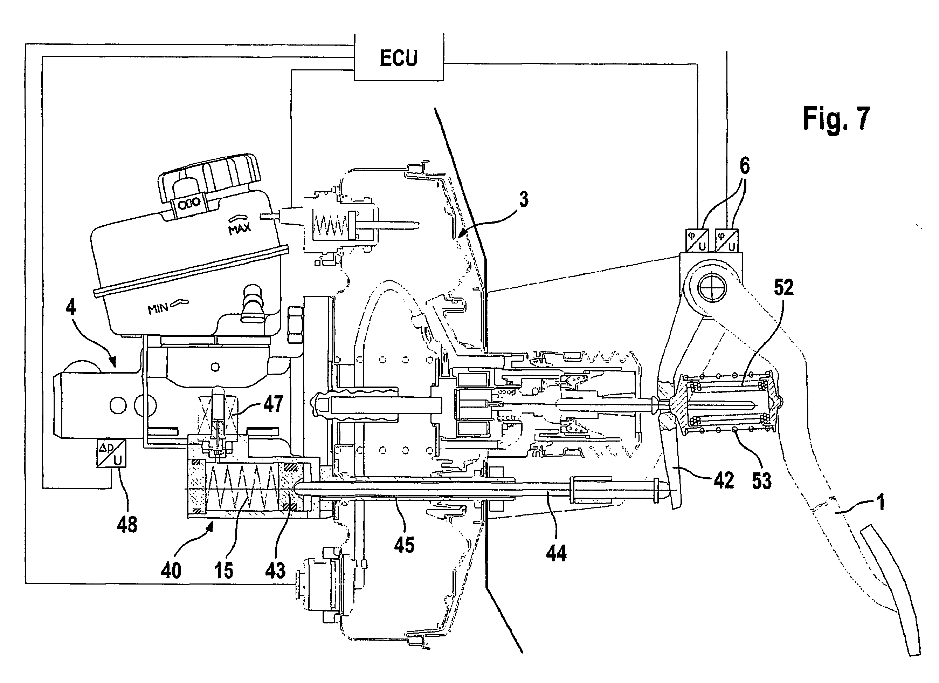

Bei der in Fig. 7 dargestellten Ausführung ist der Pedalwegsimulator durch koaxial zueinander angeordnete Spiral- bzw. Druckfedern 52, 53 gebildet, die zwischen dem Bremspedal 1 und dem im Zusammenhang mit der Ausführung gemäß Fig. 5 erwähnten Winkelhebel 42 eingespannt sind, der sich am Kraftübertragungsglied 44 abstützt.

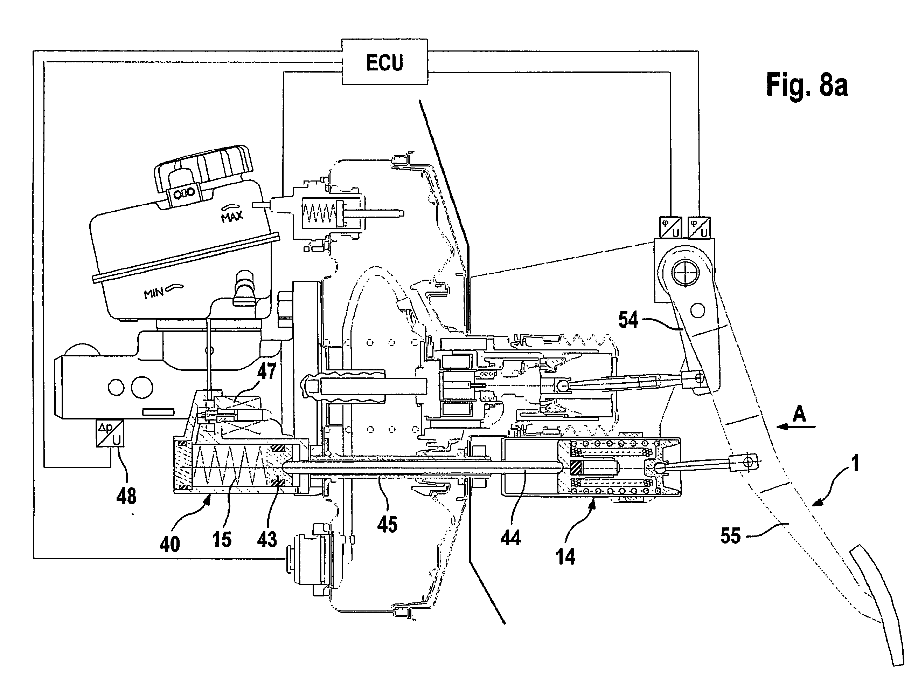

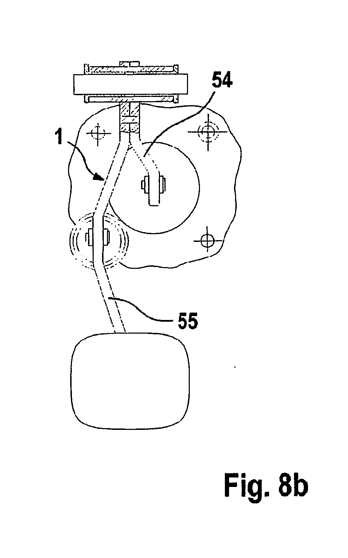

Bei dem in Fig. 8 dargestellten Ausführungsbeispiel ist die Simulatoreinheit 14 gegenüber der Längsachse des Bremskraftverstärkers 3 radial versetzt im Fahrgastraum des Fahrzeuges angeordnet. Dabei weist das Bremspedal 1 zwei nebeneinander angeordnete Betätigungsarme 54, 55 auf, die einzeln der Betätigung des Bremskraftverstärkers 3 sowie des Pedalwegsimulators 2 dienen. Bis auf diese Unterscheidungsmerkmale entspricht die gezeigte Ausführung der Ausführung gemäß Fig. 7.

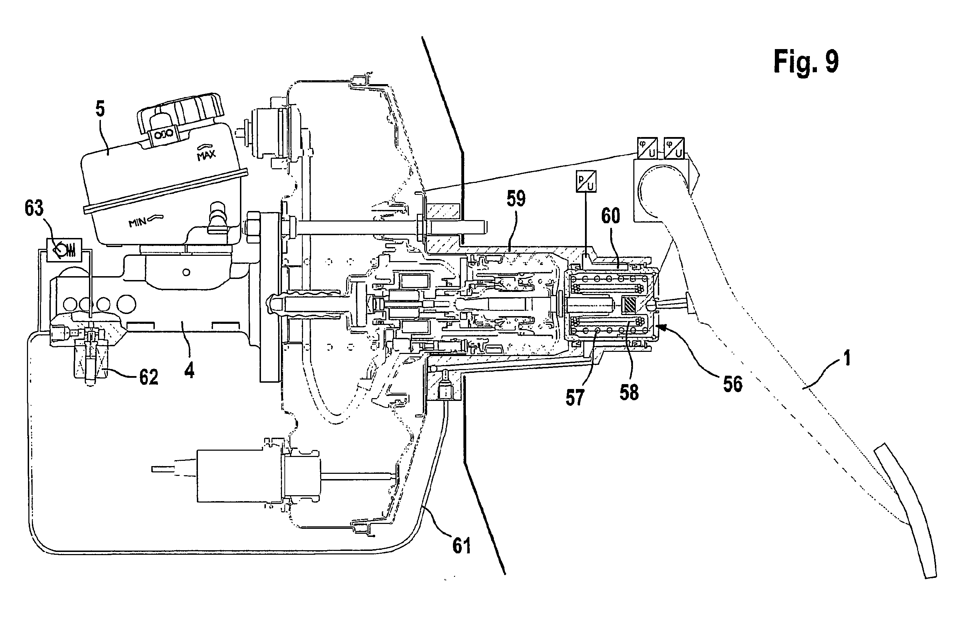

Die in Fig. 9 gezeigte erfindungsgemäße Betätigungseinheit weist eine zylinderförmige Simulatoreinheit 56 auf, die zwei koaxial angeordnete Simulatorfedern 57, 58 aufnimmt und die im Kraftfluss zwischen dem Bremspedal 1 und dem Bremskraftverstärker 3, vorzugsweise koaxial zu diesem angeordnet ist. Die Simulatoreinheit 56 ist dabei vorzugsweise als ein hydraulischer Kolben ausgebildet und begrenzt in einem, die Simulatoreinheit 56 sowie teilweise den Bremskraftverstärker 3 radial umgreifenden Bauteil 59 einen absperrbaren hydraulischen Raum 60. Das Bauteil 59 kann vorzugsweise als ein Adapter ausgebildet sein, der der Zufuhr der Luft zum Steuerventil des Bremskraftverstärkers 3 aus dem Motorraum des Fahrzeuges dient. Der hydraulische Raum 60 ist über eine lediglich schematisch angedeutete hydraulische Leitung 61 an einen der Druckräume des Hauptbremszylinders 4 oder den dem Hauptbremszylinder 4 zugeordneten Druckmittelvorratsbehälter 5 angeschlossen. Der Absperrung der Leitung 61 dient ein elektromagnetisch betätigbares Ventil 62, dem im dargestellten Beispiel ein Rückschlagventil 63 parallel geschaltet ist.

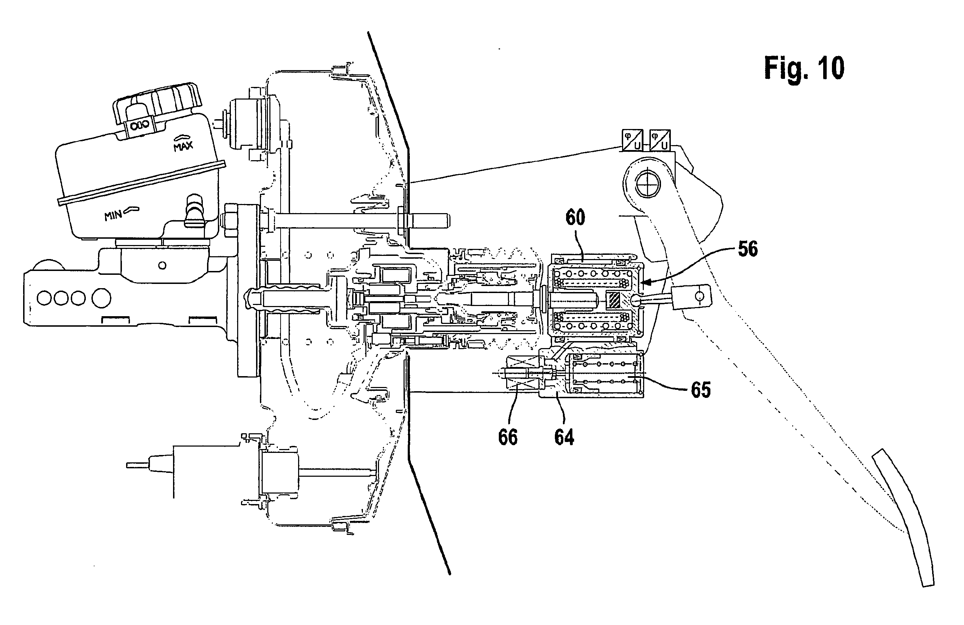

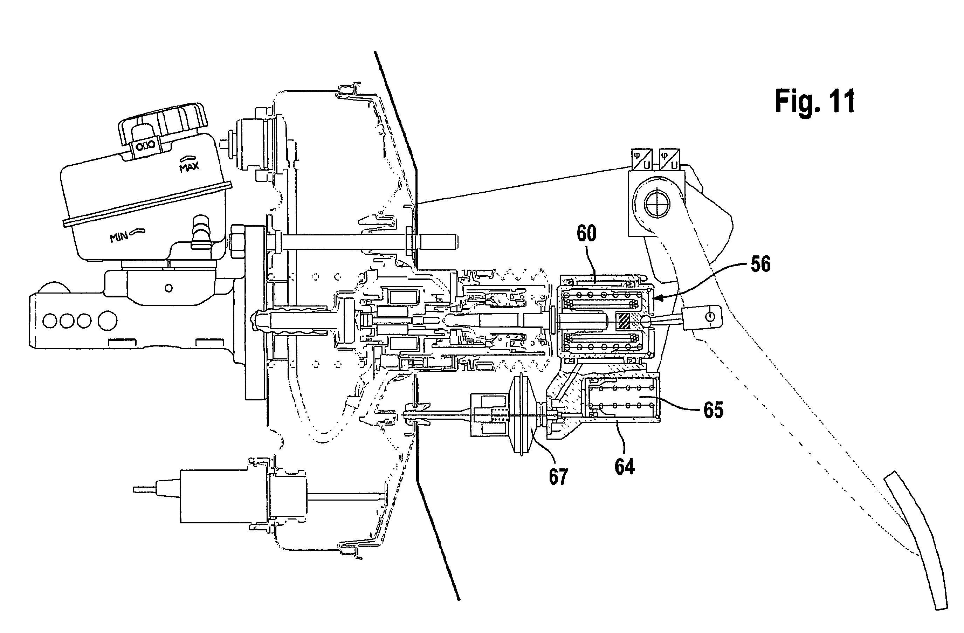

Der Aufbau der in den Fig. 10 und 11 gezeigten Ausführungen entspricht weitgehend dem der Ausführung gemäß Fig. 9. Der vorhin erwähnte hydraulische Raum 60 ist jedoch in einem die Simulatoreinheit 56 radial umgreifenden Gehäuse 64 ausgebildet, das einen Niederdruckspeicher 65 aufnimmt, mit dem der Raum 60 in Verbindung steht. Die Verbindung zwischen dem Raum 60 und dem Niederdruckspeicher 65 ist, wie im vorher gehenden Beispiel, mittels eines elektromagnetisch betätigbaren Ventils 66 (Fig. 10) bzw. eines elektropneumatisch oder pneumatisch betätigbaren Ventils 67 (Fig. 11) absperrbar.

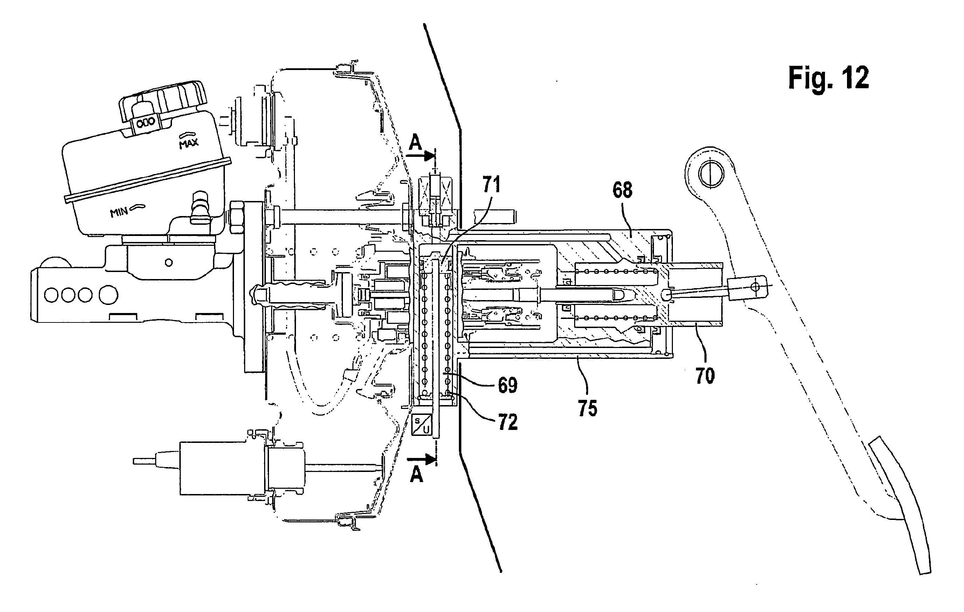

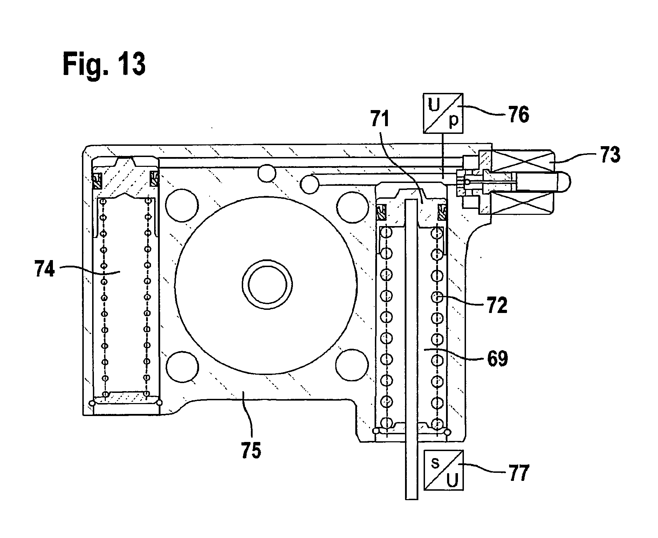

Die in Fig. 12 und 13 dargestellte Ausführungsvariante zeichnet sich dadurch aus, dass der Pedalwegsimulator durch einen mittels des Bremspedals 1 betätigbaren hydraulischen Geberzylinder 68 mit einem Geberzylinderkolben 70 sowie einen dem Geberzylinder 68 nachgeschalteten Nehmerzylinder 69 gebildet ist, dessen Nehmerzylinderkolben 71 durch eine Simulatorfeder 72 vorgespannt ist, wobei der Nehmerzylinder 69 über eine mittels eines elektromagnetisch betätigbaren Ventils 73 (Fig. 13) absperrbare Verbindung an einen Niederdruckspeicher 74 angeschlossen ist. An den Nehmerzylinder 69 ist ein Drucksensor 76 zum Sensieren des darin herrschenden Druckes angeschlossen, während ein Wegsensor 77 dem Erfassen der Lage des Nehmerzylinderkolbens 71 dient.

Der Pedalwegsimulator ist, wie im vorhin genannten Beispiel, in einem mindestens teilweise den Bremskraftverstärker 3 radial umgreifenden Adapter 75 ausgebildet, der der Zufuhr der Luft zum Bremskraftverstärker 3 aus dem Motorraum des Fahrzeuges dient.

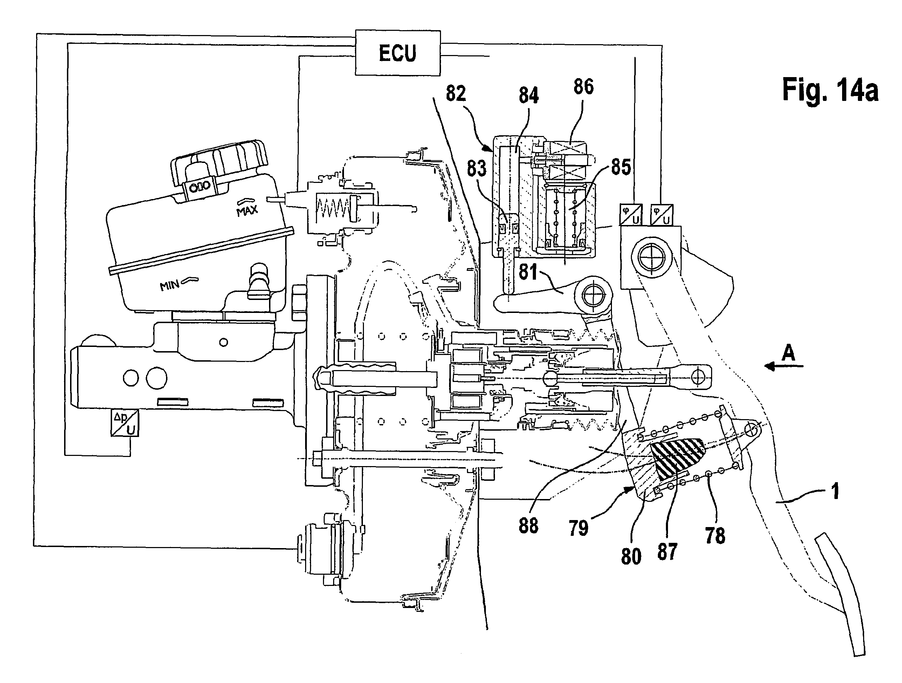

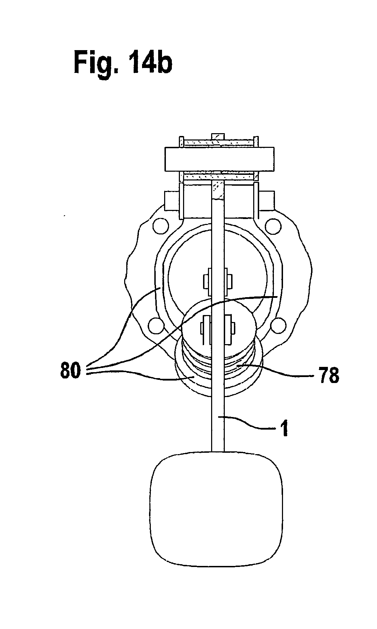

Bei der in Fig. 14 dargestellten vorteilhaften Ausführung ist der Pedalwegsimulator durch eine Druckfeder 78 gebildet, die zwischen dem Bremspedal 1 und einem zweiarmigen Hebel 79 eingespannt ist. Der zweiarmige Hebel 79 ist gegenüber dem Bremspedal 1 versetzt begrenzt drehbar gelagert, wobei sein erster Arm 80 eine Abstützfläche für die Druckfeder 78 bildet, während sich sein zweiter Arm 81 an einem hydraulischen Kolben 83 einer Kolben-Zylinderanordnung 82 abstützt. Der Druckraum 84 der Kolben-Zylinderanordnung 82 ist mittels einer hydraulischen Verbindung an einen hydraulischen Niederdruckspeicher 85 angeschlossen. In der hydraulischen Verbindung ist, wie bei den vorher gehenden Ausführungsbeispielen, ein elektromagnetisch betätigbares Ventil 86 eingefügt, das ein Absperren der erwähnten Verbindung ermöglicht.

Der erste Arm 80 des zweiarmigen Hebels 79, der mit einem elastischen Anschlagmittel 87 für das Bremspedal 1 versehen ist, weist einen Durchbruch 88 auf, der bei abgeschaltetem Pedalwegsimulator zumindest teilweise das Steuergehäuse des Bremskraftverstärkers 3 umgreift. Denkbar ist selbstverständlich auch eine leicht modifizierte Ausführung, bei der der zweiarmige Hebel 78 koaxial mit dem Bremspedal 1 gelagert ist.

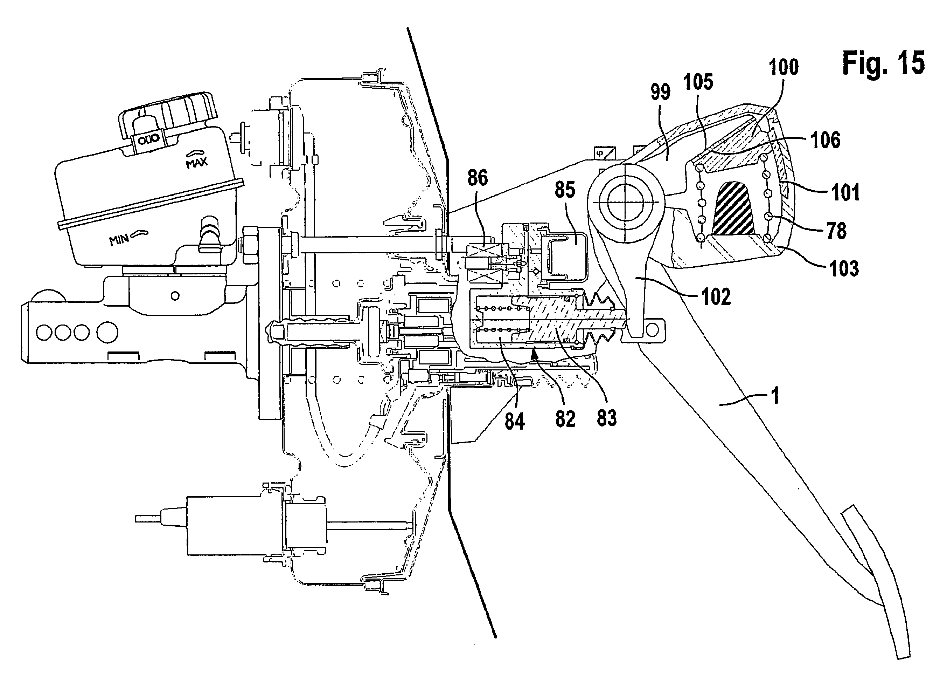

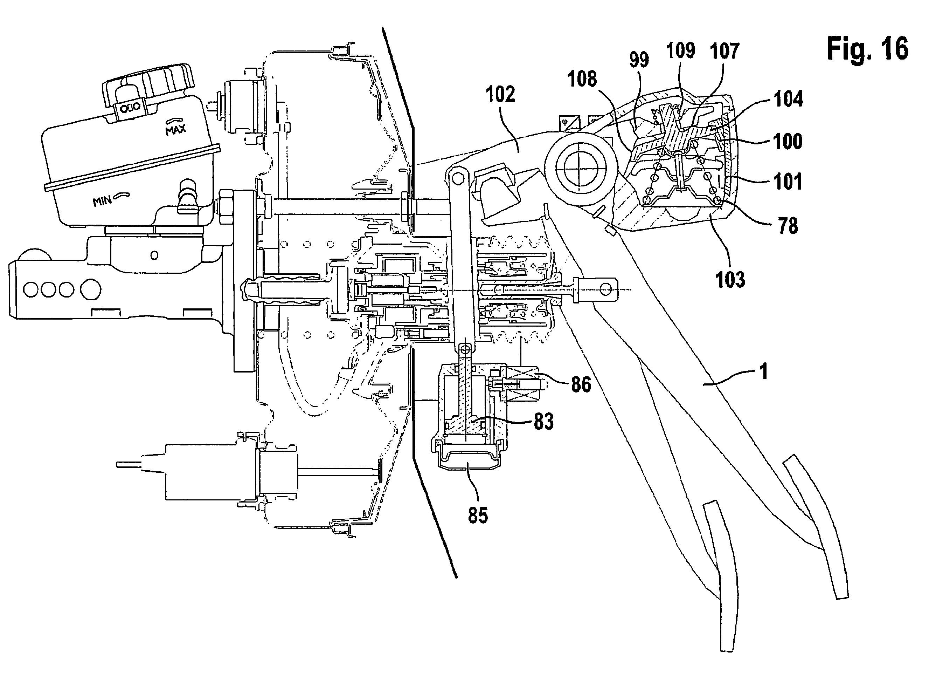

Der Aufbau der in den Fig. 15 und 16 gezeigten Ausführungen der erfindungsgemäßen Betätigungseinheit entspricht weitgehend dem der Ausführung gemäß Fig. 14, wobei für die gleichen Teile die gleichen Bezugszeichen verwendet werden. Die erwähnten Figuren zeigen zwei Ausführungsbeispiele der vorhin erwähnten Mittel zur Erzeugung einer Hysterese.

Bei der in Fig. 15 gezeigten Anordnung ist ein mit dem Bremspedal 1 verbundener Kraftübertragungshebel 99 vorgesehen, an dem unter der Wirkung der Simulatorfeder 78 ein Reibglied 100 anliegt. Das Reibglied 100 wirkt mit einer Reibfläche 101 zusammen. Die Anlage des Reibglieds 100 am Kraftübertragungshebel 99 erfolgt mittels schräg angeordneter Anlageflächen 105, 106 derart, dass bei der Betätigung des Pedalwegsimulators 2 eine Kraftkomponente entsteht, die das Reibglied 100 gegen die Reibfläche 101 drückt. Die vorhin genannten Elemente 78, 99, 100, 101 sind vorzugsweise in einem Gehäuse 103 angeordnet, das koaxial zum Bremspedal 1 gelagert ist und einen Arm 102 aufweist, der sich an dem im Zusammenhang mit Fig. 14 erwähnten hydraulischen Kolben 83 der Kolben-Zylinder-Anordnung 82 abstützt.

Bei der in Fig. 16 dargestellten Ausführungsvariante ist das Reibglied 100 an einem Übersetzungshebel 104 angeordnet ist, der sich an zwei Stellen 107, 108 am Kraftübertragungshebel 99 derart abstützt, dass eine Verstärkung der Kraftkomponente, die das Reibglied 100 an die Reibfläche 101 andrückt, erfolgt. Der besseren Positionierung des Übersetzungshebels 104 dient eine Zugfeder 109. Das Gehäuse 103 nimmt bei der gezeigten Ausführung außer den vorhin genannten Elementen auch den Übersetzungshebel 104 sowie die Zugfeder 109 auf.

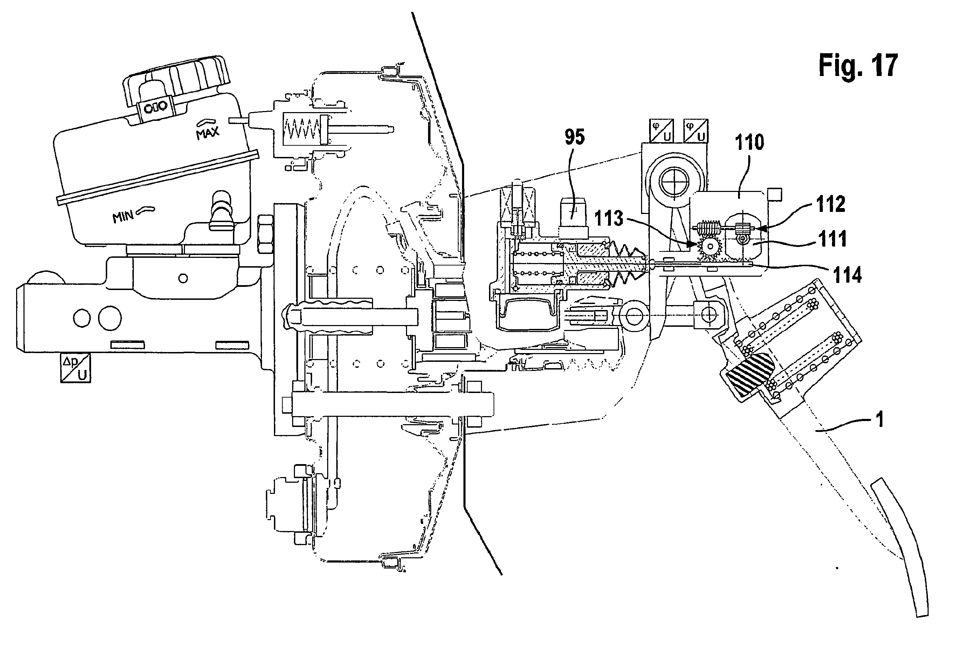

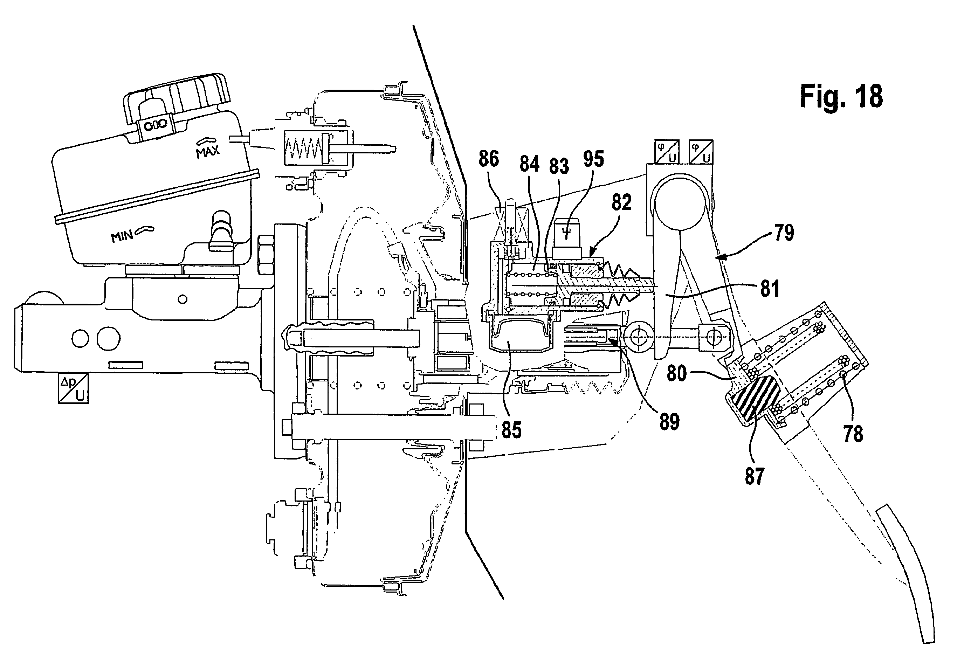

Bei den in den Fig. 17 und 18 dargestellten Ausführungsbeispielen, deren Aufbau ebenso weitgehend dem der Ausführung gemäß Fig. 14 entspricht, sind Mittel vorgesehen, die eine Überprüfung der Beweglichkeit des hydraulischen Kolbens 83 bzw. der Funktion des Absperrventils 86 ermöglichen.

Bei der in Fig. 18 gezeigten Variante ist zwischen dem Bremskraftverstärker 3 und dem Bremspedal 1 eine schematisch angedeutete mechanische Verbindung 89 vorgesehen, die die Übertragung einer von dem Bremskraftverstärker 3 aufgebrachten Zugkraft auf das Bremspedal 1 und somit, mittels der Simulatorfeder 78 und des zweiarmigen Hebels 79, auf den Kolben 83 ermöglicht. Eine Sensoreinrichtung 95, die beispielsweise als ein Hallsensor ausgeführt sein kann, erfasst bei intaktem System die Bewegung des Kolbens 83, die jedoch nur dann möglich ist, wenn das Absperrventil 86 die hydraulische Verbindung zwischen dem Druckraum 84 und dem Niederdruckspeicher 85 frei gibt.

Bei der in Fig. 17 gezeigten Variante ist dagegen eine elektromechanische Antriebseinheit 110 vorgesehen, die eine vom Bremspedal 1 unabhängige Betätigung des Kolbens 83 ermöglicht. Wie der Zeichnung zu entnehmen ist, besteht die Antriebseinheit 110 im wesentlichen aus einem Elektromotor 111, zwei Getriebestufen 112, 113 sowie einer Zahnstange 114, die mit dem Abtriebselement der zweiten Getriebestufe 113 im Eingriff steht und bei ihrer translatorischen Bewegung eine Verschiebung des hydraulischen Kolbens bewirkt. Es ist jedoch auch denkbar, zum gleichen Zweck eine nicht dargestellte pneumatische Antriebseinheit zu verwenden.

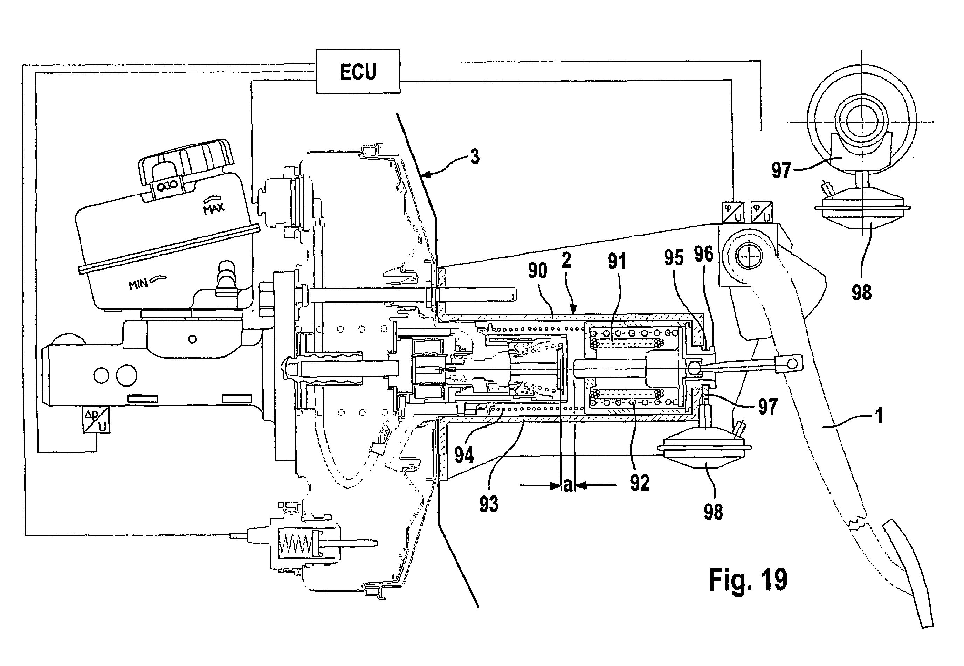

Fig. 19 zeigt schließlich eine Ausführungsvariante der erfindungsgemäßen Betätigungseinheit, bei der das Zu- sowie das Abschalten des Pedalwegsimulators 2 durch pneumatisch, vorzugsweise durch Unterdruck, betätigbare Mittel erfolgt, die durch eine im Fahrzeug vorgesehene Unterdruckquelle, beispielsweise eine Unterdruckpumpe, betätigbar sind.
Der Pedalwegsimulator 2 ist im gezeigten Beispiel als eine bewegliche Simulatoreinheit 90 ausgebildet, die im Kraftfluss zwischen dem Bremspedal 1 und dem Bremskraftverstärker 3, vorzugsweise koaxial zu diesem angeordnet ist und die zwei koaxial zueinander angeordnete Druckfedern 91,92 aufnimmt. Die Simulatoreinheit 90 ist dabei vorzugsweise in einem zylindrischen Bauteil 93 verschiebbar geführt, das das Steuergehäuse des Bremskraftverstärkers 3, das ein pneumatisches Steuerventil enthält, sowie eine den Pedalwegsimulator 2 entgegen seiner Betätigungsrichtung vorspannende Rückstellfeder 94 aufnimmt. Die Simulatoreinheit 90 weist an ihrem aus dem zylindrischen Bauteil 93 heraus ragenden Ende eine axiale Verlängerung 95 mit einem radialen Kragen 96 auf, mit dem ein Arretierungselement 97 zusammenwirkt.

Das Arretierungselement 97 wird durch eine Unterdruckdose 98 derart betätigt, dass der Kragen 96 in der Betriebsart "Brake-by-wire" vom Arretierungselement 96 festgehalten und außerhalb der Betriebsart "Brake-by-wire", beispeilsweise bei einem Ausfall der Unterdruckquelle, von diesem freigegeben wird.

Das Bremspedal kann bei allen hier erläuterten Ausführungen selbstverständlich auch verstellbar angeordnet sein.

## Patentansprüche

1. Bremsbetätigungseinheit zur Betätigung einer Kraftfahrzeugbremsanlage vom Typ "Brake-by-wire", die aus
a)einem sowohl mittels eines Bremspedals (1) als auch mittels einer elektronischen Steuereinheit (7) fahrerwunschabhängig betätigbaren Bremskraftverstärker (3), wobei Mittel zur Entkopplung einer kraftübertragenden Verbindung zwischen dem Bremspedal (1) und dem Bremskraftverstärker (3) in der Betriebsart "Brake-by-wire" vorgesehen sind,
b)einem dem Bremskraftverstärker (3) nachgeschalteten Hauptbremszylinder (4),
c) Mitteln zum Erfassen eines Fahrerverzögerungswunsches (6), sowie
d) einem mit dem Bremspedal (1) zusammenwirkenden Pedalwegsimulator (2) besteht, durch den in der Betriebsart "Brake-by-wire" eine auf das Bremspedal (1) wirkende Rückstellkraft unabhängig von einer Betätigung des Bremskraftverstärkers (3) simulierbar ist und der in der Betriebsart "Brake-by-wire" bei der Entkopplung der kraftübertragenden Verbindung zwischen dem Bremspedal (1) und dem Bremskraftverstärker (3) zuschaltbar und außerhalb der Betriebsart "Brake-by-wire" abschaltbar ist,
**dadurch gekennzeichnet, dass** das Zu- sowie das Abschalten des Pedalwegsimulators (2) durch elektromechanische Mittel erfolgt, welche durch einen Elektromagneten (25,25',25") und einem aus ferromagnetischem Werkstoff ausgebildeten Ring eines Schwenkhebels (24) oder einem mittels des Elektromagneten (25',25") betätigbaren Arretierungselement (31,38) gebildet sind, und dass der Pedalwegsimulator (2) eine bewegliche Simulatoreinheit (14,14') aufweist, die mindestens eine Simulatorfeder (17,18,32,33,34) aufnimmt und eine Abstützfläche (22) für die Simulatorfeder (17,18,32,33,34) aufweist bzw. bildet, wobei die Abstützfläche (22) durch die elektromechanischen Mittel in der Betriebsart Brake-by-wire festgehalten wird, so dass die Simulatoreinheit (14,14') nicht verschiebbar bzw. die Simulatorfeder (17, 18, 32, 33, 34) komprimierbar bzw. verbiegbar ist, und außerhalb der Betriebsart Brake-by-wire freigegeben wird, so dass die Simulatoreinheit (14,14') verschiebbar bzw. die Simulatorfeder (17,18,32,33,34) nicht komprimierbar bzw. verbiegbar ist.

2. Bremsbetätigungseinheit nach Anspruch 1, **dadurch gekennzeichnet, dass** die elektromechanischen Mittel durch die elektronische Steuereinheit (7) ansteuerbar sind.

3. Bremsbetätigungseinheit nach Anspruch 1, **dadurch gekennzeichnet, dass** der Schwenkhebel (24) begrenzt drehbar gelagert ist.

4. Bremsbetätigungseinheit nach einem der Ansprüche 1 bis 3, **dadurch gekennzeichnet, dass** der Schwenkhebel (24) in einem Punkt (P) gelagert ist, der radial versetzt gegenüber der Längsachse der Simulatoreinheit (14) angeordnet ist.

5. Bremsbetätigungseinheit nach einem der Ansprüche 1 bis 4, **dadurch gekennzeichnet, dass** der Schwenkhebel als ein kraftübersetzender Hebel ausgebildet ist.

6. Bremsbetätigungseinheit nach einem der Ansprüche 1 bis 5, **dadurch gekennzeichnet, dass** der Pedalwegsimulator (2) nicht im Kraftfluss zwischen dem Bremspedal (1) und dem Bremskraftverstärker (3) angeordnet ist.

7. Bremsbetätigungseinheit nach Anspruch 1, **dadurch gekennzeichnet, dass** ein zylindrisches Bauteil (30) vorgesehen ist, das mindestens teilweise ein Steuergehäuse (29) des Bremskraftverstärkers (3), das ein pneumatisches Steuerventil enthält, die Simulatoreinheit (14') sowie eine die Simulatoreinheit (14') entgegen ihrer Betätigungsrichtung vorspannende Rückstellfeder (15') aufnimmt.

8. Bremsbetätigungseinheit nach Anspruch 1 oder 2, **dadurch gekennzeichnet, dass** die Simulatorfeder als mindestens eine Blattfeder (32, 33, 34) ausgebildet ist, die in einem koaxial zum Bremspedal (1) begrenzt drehbar gelagerten Winkelhebel (35) eingespannt ist und dass die elektromechanischen Mittel durch einen Arm (36) des Winkelhebels (35) sowie das mittels des Elektromagneten (25") betätigbares Arretierungselement (38) gebildet sind, das in der Betriebsart "Brake-by-wire" eine Bewegung des Winkelhebels (35) verhindert.

9. Bremsbetätigungseinheit nach Anspruch 8 **dadurch gekennzeichnet, dass** der Winkelhebel (35) mit einem elastischen Dämpfungsmittel (39) versehen ist, das als Anschlag für die Simulatorfeder (32-34) dient und eine progressive Kennlinie der Simulatorfeder gewährleistet.

10. Bremsbetätigungseinheit nach Anspruch 7, **dadurch gekennzeichnet, dass** der Pedalwegsimulator (2) im Kraftfluss zwischen dem Bremspedal (1) und dem Bremskraftverstärker (3), vorzugsweise koaxial zu diesem angeordnet ist.

11. Bremsbetätigungseinheit zur Betätigung einer Kraftfahrzeugbremsanlage vom Typ "Brake-by-wire", die aus
a)einem sowohl mittels eines Bremspedals (1) als auch mittels einer elektronischen Steuereinheit (7) fahrerwunschabhängig betätigbaren Bremskraftverstärker (3), wobei Mittel zur Entkopplung einer kraftübertragenden Verbindung zwischen dem Bremspedal (1) und dem Bremskraftverstärker (3) in der Betriebsart "Brake-by-wire" vorgesehen sind,
b) einem dem Bremskraftverstärker (3) nachgeschalteten Hauptbremszylinder (4),
c) Mitteln zum Erfassen eines Fahrerverzögerungswunsches (6), sowie
d) einem mit dem Bremspedal (1) zusammenwirkenden Pedalwegsimulator (2) besteht, durch den in der Betriebsart "Brake-by-wire" eine auf das Bremspedal (1) wirkende Rückstellkraft unabhängig von einer Betätigung des Bremskraftverstärkers (3) simulierbar ist und der in der Betriebsart "Brake-by-wire" bei der Entkopplung der kraftübertragenden Verbindung zwischen dem Bremspedal (1) und dem Bremskraftverstärker (3) zuschaltbar und außerhalb der Betriebsart "Brake-by-wire" abschaltbar ist,
**dadurch gekennzeichnet, dass** das Zu- sowie das Abschalten des Pedalwegsimulators (2) durch elektrohydraulische Mittel erfolgt, welche durch eine mittels eines elektromagnetisch, pneumatisch oder elektropneumatisch betätigbaren Ventils (47, 62, 66, 67, 73, 86) absperrbare hydraulische Zylinder-Kolbenanordnung (40, 56/60, 82) gebildet sind, und dass der Pedalwegsimulator (2) eine bewegliche Simulatoreinheit (56) aufweist, die mindestens eine Simulatorfeder (41,49,50,52,53,57,58,78) aufnimmt und eine Abstützfläche (43, 56, 71, 80) für die Simulatorfeder aufweist bzw. bildet, wobei die Abstützfläche (43, 56, 71, 80) direkt oder unter Zwischenschaltung eines Kraftübertragungsglieds (44) bzw. eines begrenzt drehbar gelagerten, zweiarmigen Hebels (79) durch die elektrohydraulischen Mittel in der Betriebsart Brake-by-wire festgehalten wird, so dass die Simulatoreinheit (56) nicht verschwenkbar bzw. die Simulatorfeder (41,49,50,52,53,57,58,78) komprimierbar bzw. verbiegbar ist, und außerhalb der Betriebsart Brake-by-wire freigegeben wird, so dass die Simulatoreinheit (56) verschwenkbar bzw. die Simulatorfeder (41,49,50,52,53,57,58,78) nicht komprimierbar bzw. verbiegbar ist.

12. Bremsbetätigungseinheit nach Anspruch 11, **dadurch gekennzeichnet, dass** die elektrohydraulischen Mittel durch die elektronische Steuereinheit (7) ansteuerbar sind.

13. Bremsbetätigungseinheit nach Anspruch 11 oder 12, wobei der Pedalwegsimulator mindestens eine Simulatorfeder aufweist, **dadurch gekennzeichnet, dass** zwischen einem Kolben (43) der Zylinder-Kolbenanordnung (40) und der Simulatorfeder (41) das Kraftübertragungsglied (44) vorgesehen ist, an dem eine Abstützfläche (42) für die Simulatorfeder (41) anliegt.

14. Bremsbetätigungseinheit nach Anspruch 13, **dadurch gekennzeichnet, dass** die Kolben-Zylinderanordnung (40) sowie das Kraftübertragungsglied (44) gegenüber der Achse des Bremskraftverstärkers (3) radial versetzt angeordnet sind.

15. Bremsbetätigungseinheit nach Anspruch 14, **dadurch gekennzeichnet, dass** die Kolben-Zylinderanordnung (40) im Motorraum des Kraftfahrzeuges angeordnet werden kann.

16. Bremsbetätigungseinheit nach einem der Ansprüche 13 bis 15, **dadurch gekennzeichnet, dass** die Kolben-Zylinderanordnung (40) eine Rückstellfeder (15) aufweist, die das Kraftübertragungsglied (44) gegen die Betätigungsrichtung des Bremspedals (1) vorspannt.

17. Bremsbetätigungseinheit nach einem der Ansprüche 13 bis 16, **dadurch gekennzeichnet, dass** der Bremskraftverstärker (3) ein pneumatischer Bremskraftverstärker ist, der mindestens einen sich durch sein Verstärkergehäuse hindurch erstreckenden Kraftübertragungsbolzen (45) aufweist, der mit einer Durchgangsbohrung versehen ist, die das Kraftübertragungsglied (44) aufnimmt.

18. Bremsbetätigungseinheit nach einem der Ansprüche 13 bis 17, **dadurch gekennzeichnet, dass** die Simulatorfeder (41) als mindestens eine Blattfeder ausgebildet ist.

19. Bremsbetätigungseinheit nach einem der Ansprüche 13 bis 17, **dadurch gekennzeichnet, dass** der Pedalwegsimulator (2) als mindestens eine Druckfeder (52, 53) ausgebildet ist, die zwischen dem Bremspedal (1) und einem koaxial zum Bremspedal (1) begrenzt drehbar gelagerten Winkelhebel (42) eingespannt ist, der sich am Kraftübertragungsglied (44) abstützt.

20. Bremsbetätigungseinheit nach Anspruch 11 oder 12, **dadurch gekennzeichnet, dass** die Simulatorfeder (49, 50) in der Zylinder-Kolbenanordnung (40) angeordnet ist und sich am Kolben (43) der Zylinder-Kolbenanordnung (40) abstützt.

21. Bremsbetätigungseinheit nach Anspruch 20, **dadurch gekennzeichnet, dass** ein Mittel (51) zum Sensieren der Lage des Kolbens (43) vorgesehen ist.

22. Bremsbetätigungseinheit nach einem der Ansprüche 13 bis 17, **dadurch gekennzeichnet, dass** die Simulatorfeder von einer Simulatoreinheit (14) aufgenommen wird, die gegenüber der Achse des Bremskraftverstärkers (3) radial versetzt angeordnet ist.

23. Bremsbetätigungseinheit nach Anspruch 11 oder 12, **dadurch gekennzeichnet, dass** die Simulatorfeder (57,58) von einer Simulatoreinheit (56) aufgenommen wird, die im Kraftfluss zwischen dem Bremspedal (1) und dem Bremskraftverstärker (3), vorzugsweise koaxial zu diesem angeordnet ist.

24. Bremsbetätigungseinheit nach Anspruch 23, **dadurch gekennzeichnet, dass** die Simulatoreinheit (56) als ein hydraulischer Kolben ausgebildet ist und in einem mindestens die Simulatoreinheit (56) radial umgreifenden Bauteil (59) einen absperrbaren hydraulischen Raum (60) bildet.

25. Bremsbetätigungseinheit nach Anspruch 24, **dadurch gekennzeichnet, dass** der hydraulische Raum (60) an einen der Druckräumedes Hauptbremszylinders (4) oder einen dem Hauptbremszylinder (4) zugeordneten Druckmittelvorratsbehälter (5) angeschlossen ist.

26. Bremsbetätigungseinheit nach Anspruch 24, **dadurch gekennzeichnet, dass** der hydraulische Raum (60) an einen Niederdruckspeicher (65) angeschlossen ist.

27. Bremsbetätigungseinheit nach Anspruch 25, **dadurch gekennzeichnet, dass** das Bauteil (59) als ein mindestens teilweise den Bremskraftverstärker 3 radial umgreifender Adapter ausgebildet ist, der der Zufuhr der Luft zum Bremskraftverstärker (3) aus dem Motorraum des Fahrzeuges dient.

28. Bremsbetätigungseinheit nach einem der Ansprüche 24 bis 27, **dadurch gekennzeichnet, dass** der hydraulische Raum (60) mittels des elektromagnetisch, elektropneumatisch oder pneumatisch betätigbaren Ventils (62,66,67) absperrbar ist.

29. Bremsbetätigungseinheit nach Anspruch 11 oder 12, **dadurch gekennzeichnet, dass** der Pedalwegsimulator (2) durch einen mittels des Bremspedals (1) betätigbaren hydraulischen Geberzylinder (68) sowie einen dem Geberzylinder (68) nachgeschalteten hydraulischen Nehmerzylinder (69) gebildet ist, dessen Kolben (71) durch die Simulatorfeder (72) vorgespannt ist, wobei der Nehmerzylinder (69) über eine mittels eines Ventils (73) absperrbare Verbindung an einen Niederdruckspeicher (74) angeschlossen ist.

30. Bremsbetätigungseinheit nach Anspruch 29, **dadurch gekennzeichnet, dass** der Pedalwegsimulator (2) in einem mindestens teilweise den Bremskraftverstärker (3) radial umgreifenden Adapter (75) ausgebildet ist, der der Zufuhr der Luft zum Bremskraftverstärker (3) aus dem Motorraum des Fahrzeuges dient.

31. Bremsbetätigungseinheit nach Anspruch 29 oder 30, **dadurch gekennzeichnet, dass** Mittel (77) zum Sensieren der Lage des Nehmerzylinderkolbens (71) vorgesehen sind.

32. Bremsbetätigungseinheit nach Anspruch 29, 30 oder 31, **dadurch gekennzeichnet, dass** Mittel (76) zum Sensieren des im Nehmerzylinder (69) herrschenden Druckes vorgesehen sind.

33. Bremsbetätigungseinheit nach Anspruch 11 oder 12, **dadurch gekennzeichnet, dass** der Pedalwegsimulator (2) durch eine Simulatorfeder (78) gebildet ist, die zwischen dem Bremspedal (1) und dem begrenzt drehbar gelagerten, zweiarmigen Hebel (79) eingespannt ist, dessen erster Arm (80) die Abstützfläche für die Simulatorfeder (78) bildet und dessen zweiter Arm (81) mit einem hydraulischen Kolben (83) einer Kolben-Zylinderanordnung (82) zusammenwirkt, deren Druckraum (84) über eine absperrbare hydraulische Verbindung an einen hydraulischen Niederdruckspeicher (85) angeschlossen ist.

34. Bremsbetätigungseinheit nach Anspruch 33, **dadurch gekennzeichnet, dass** der erste Arm (80) einen Durchbruch (88) aufweist, der bei einer Betätigung des Bremskraftverstärkers (3) außerhalb der Betriebsart "Brake-by-wire" zumindest teilweise das Steuergehäuse des Bremskraftverstärkers (3) umgreift.

35. Bremsbetätigungseinheit nach Anspruch 33 oder 34, **dadurch gekennzeichnet, dass** der zweiarmige Hebel (79) koaxial mit dem Bremspedal (1) oder gegenüber dem Bremspedal (1) versetzt gelagert ist.

36. Bremsbetätigungseinheit zur Betätigung einer Kraftfahrzeugbremsanlage vom Typ "Brake-by-wire", die aus
a) einem sowohl mittels eines Bremspedals (1) als auch mittels einer elektronischen Steuereinheit (7) fahrerwunschabhängig betätigbaren Bremskraftverstärker (3), wobei Mittel zur Entkopplung einer kraftübertragenden Verbindung zwischen dem Bremspedal (1) und dem Bremskraftverstärker (3) in der Betriebsart "Brake-by-wire" vorgesehen sind,
b) einem dem Bremskraftverstärker (3) nachgeschalteten Hauptbremszylinder (4),
c) Mitteln zum Erfassen eines Fahrerverzögerungswunsches (6), sowie
d) einem mit dem Bremspedal (1) zusammenwirkenden Pedalwegsimulator (2) besteht, durch den in der Betriebsart "Brake-by-wire" eine auf das Bremspedal (1) wirkende Rückstellkraft unabhängig von einer Betätigung des Bremskraftverstärkers (3) simulierbar ist und der in der Betriebsart "Brake-by-wire" bei der Entkopplung der kraftübertragenden Verbindung zwischen dem Bremspedal (1) und dem Bremskraftverstärker (3) zuschaltbar und außerhalb der Betriebsart "Brake-by-wire" abschaltbar ist,
**dadurch gekennzeichnet, dass** das Zu- sowie das Abschalten des Pedalwegsimulators (2) durch Unterdruck betätigte Mittel erfolgt, welche durch ein mittels einer Unterdruckdose (98) betätigbares Arretierungselement (97) gebildet sind, und dass der Pedalwegsimulator (2) eine bewegliche Simulatoreinheit (90) aufweist, die mindestens eine Simulatorfeder (91,92) aufnimmt und eine Abstützfläche für die Simulatorfeder (91,92) aufweist bzw. bildet, wobei die Abstützfläche durch die pneumatisch betätigbaren Mittel in der Betriebsart Brake-by-wire festgehalten wird, so dass die Simulatoreinheit (90) nicht verschiebbar bzw. die Simulatorfeder (91,92) komprimierbar bzw. verbiegbar ist, und außerhalb der Betriebsart Brake-by-wire freigegeben wird, so dass die Simulatoreinheit (90) verschiebbar bzw. die Simulatorfeder (91,92) nicht komprimierbar bzw. verbiegbar ist.

37. Bremsbetätigungseinheit nach Anspruch 36, **dadurch gekennzeichnet, dass** die durch Unterdruck betätigbaren Mittel durch eine im Fahrzeug vorgesehene Unterdruckquelle betätigbar sind.

38. Bremsbetätigungseinheit nach Anspruch 36, **dadurch gekennzeichnet, dass** der Pedalwegsimulator (2) im Kraftfluss zwischen dem Bremspedal (1) und dem Bremskraftverstärker (3), vorzugsweise koaxial zu diesem angeordnet ist.

39. Bremsbetätigungseinheit nach Anspruch 38, **dadurch gekennzeichnet, dass** ein zylindrisches Bauteil (90) vorgesehen ist, das mindestens teilweise ein Steuergehäuse des Bremskraftverstärkers (3), das ein pneumatisches Steuerventil enthält, die Simulatoreinheit (90) sowie eine die Simulatoreinheit (90) entgegen ihrer Betätigungsrichtung vorspannende Rückstellfeder (94) aufnimmt.

40. Bremsbetätigungseinheit nach einem der vorhergehenden Ansprüche, **dadurch gekennzeichnet, dass** Mittel zur Erzeugung einer Hysterese vorgesehen sind.

41. Bremsbetätigungseinheit nach Anspruch 40, **dadurch gekennzeichnet, dass** die Mittel (19,20,99,100,101) zur Erzeugung der Hysterese derart ausgebildet sind, dass mit steigendem Hub des Pedalwegsimulators (2) zusätzlich zur Kraft der Simulatorfeder (17,18,78) Reibkräfte erzeugt werden, die der am Bremspedal (1) wirkenden Betätigungskraft entgegen wirken.

42. Bremsbetätigungseinheit nach Anspruch 41, **dadurch gekennzeichnet, dass** die Mittel zur Erzeugung der Hysterese durch einen mit dem Bremspedal (1) verbundenen Kraftübertragungshebel (99) sowie ein unter der Wirkung der Simulatorfeder (78) am Kraftübertragungshebel (99) anliegendes Reibglied (100) gebildet sind, das mit einer Reibfläche (101) zusammenwirkt.

43. Bremsbetätigungseinheit nach Anspruch 42, **dadurch gekennzeichnet, dass** der Kraftübertragungshebel (99) sowie das Reibglied (100) schräge Anlageflächen (105,106) aufweisen, die derart ausgebildet sind, dass bei der Betätigung des Pedalwegsimulators (2) eine Kraftkomponente entsteht, die das Reibglied (100) an die Reibfläche (101) andrückt.

44. Bremsbetätigungseinheit nach Anspruch 43, **dadurch gekennzeichnet, dass** das Reibglied (100) an einem Übersetzungshebel (104) angeordnet ist, der derart am Kraftübertragungshebel (99) abgestützt ist, dass eine Verstärkung der bei der Betätigung des Pedalwegsimulators (2) entstehenden Kraftkomponente, die das Reibglied (100) an die Reibfläche (101) andrückt, erfolgt.

45. Bremsbetätigungseinheit nach Anspruch 42 oder 43, **dadurch gekennzeichnet, dass** die Mittel zum Erzeugen der Hysterese in einem Gehäuse (103) angeordnet sind, das koaxial zum Bremspedal (1) auf dessen Drehachse schwenkbar gelagert ist, wobei das Gehäuse (103) einen Arm (102) aufweist, der sich an den Mitteln zum Zusowie zum Abschalten des Pedalwegsimulators (2) abstützt.

46. Bremsbetätigungseinheit nach einem der Ansprüche 33 bis 35, **dadurch gekennzeichnet, dass** Mittel (89,110,95) zur Überprüfung der Beweglichkeit des Kolbens (83) der Kolben-Zylinder-Anordnung (82) vorgesehen sind.

47. Bremsbetätigungseinheit nach Anspruch 46, **dadurch gekennzeichnet, dass** die Mittel durch eine zugkraftübertragende Verbindung (89) zwischen dem Bremspedal (1) und dem Bremskraftverstärker (3) sowie eine den Weg des Kolbens (83) erfassende Sensoreinrichtung (95) gebildet sind.

48. Bremsbetätigungseinheit nach Anspruch 46, **dadurch gekennzeichnet, dass** die Mittel durch eine Antriebseinheit (110), die eine vom Bremspedal (1) unabhängige Betätigung des Kolbens (83) der Kolben-Zylinder-Anordnung (82) ermöglicht, sowie eine den Weg des Kolbens (83) erfassende Sensoreinrichtung (95) gebildet sind.

49. Bremsbetätigungseinheit nach Anspruch 48, **dadurch gekennzeichnet, dass** die Antriebseinheit (110) als eine elektromechanische oder pneumatische Antriebseinheit ausgebildet ist.

50. Bremsbetätigungseinheit nach einem der vorhergehenden Ansprüche, **dadurch gekennzeichnet, dass** das Bremspedal (1) verstellbar angeordnet ist.

## Claims

1. Brake actuating unit for actuating a motor vehicle brake system of the brake-by-wire type, which is composed of
a) a brake booster (3) which can be actuated either by means of a brake pedal (1) or by means of an electronic control unit (7) as a function of the driver's request, wherein means are provided for decoupling a force-transmitting connection between the brake pedal (1) and the brake booster (3) in the brake-by-wire operating mode,
b) a master brake cylinder (4) which is arranged downstream of the brake booster (3),
c) means for detecting a driver deceleration request (6), and
d) a pedal travel simulator (2) interacting with the brake pedal (1), by means of which pedal travel simulator (2) a restoring force which acts on the brake pedal (1) can be simulated independently of an actuation of the brake booster (3) in the brake-by-wire operating mode and which can be activated in the brake-by-wire operating mode when the force-transmitting connection between the brake pedal (1) and the brake booster (3) is decoupled, and can be deactivated outside the brake-by-wire operating mode, **characterized in that** the activation and the deactivation of the pedal travel simulator (2) are carried out by electromechanical means which are formed by an electromagnet (25, 25', 25'') and a ring, formed from ferromagnetic material, of a pivoting lever (24) or an arresting element (31, 38) which can be actuated by means of the electromagnet (25', 25''), and **in that** the pedal travel simulator (2) has a moveable simulator unit (14, 14') which receives at least one simulator spring (17, 18, 32, 33, 34) and has or forms a support face (22) for the simulator spring (17, 18, 32, 33, 34), wherein the support face (22) is secured in the brake-by-wire operating mode by the electromechanical means so that the simulator unit (14, 14') cannot be displaced and the simulator spring (17, 18, 32, 33, 34) can be compressed or bent, and it is released outside the brake-by-wire operating mode so that the simulator unit (14, 14') can be displaced and the simulator spring (17, 18, 32, 33, 34) cannot be compressed or bent.

2. Brake actuating unit according to Claim 1, **characterized in that** the electromechanical means can be driven by the electronic control unit (7).

3. Brake actuating unit according to Claim 1, **characterized in that** the pivoting lever (24) is mounted so as to be rotatable to a limited degree.

4. Brake actuating unit according to one of Claims 1 to 3, **characterized in that** the pivoting lever (24) is mounted at a point (P) which is arranged radially offset with respect to the longitudinal axis of the simulator unit (14).

5. Brake actuating unit according to one of Claims 1 to 4, **characterized in that** the pivoting lever is embodied as a force-transmitting lever.

6. Brake actuating unit according to one of Claims 1 to 5, **characterized in that** the pedal travel simulator (2) is not arranged in the force flux between the brake pedal (1) and the brake booster (3).

7. Brake actuating unit according to Claim 1, **characterized in that** a cylindrical component (30) is provided which receives at least partially a control housing (29) of the brake booster (3), which control housing (29) contains a pneumatic control valve, the simulator unit (14') and a restoring spring (15') which prestresses the simulator unit (14') counter to its direction of actuation.

8. Brake actuating unit according to Claim 1 or 2, **characterized in that** the simulator spring is embodied as at least one leaf spring (32, 33, 34), which is clamped in an angular lever (35) which is mounted so as to be rotatable to a limited extent coaxially with respect to the brake pedal (1), and **in that** the electromechanical means are formed by an arm (36) of the angular lever (35) and the arresting element (38) which can be activated by means of the electromagnet (25'') and which prevents movement of the angular lever (35) in the brake-by-wire operating mode.

9. Brake actuating unit according to Claim 8, **characterized in that** the angular lever (35) is provided with an elastic damping means (39) which serves as a stop for the simulator spring (32-34) and ensures a progressive characteristic curve of the simulator spring.

10. Brake actuating unit according to Claim 7, **characterized in that** the pedal travel simulator (2) is arranged in the force flux between the brake pedal (1) and the brake booster (3), preferably coaxially with respect to the latter.

11. Brake actuating unit for actuating a motor vehicle brake system of the brake-by-wire type, which is composed of
a) a brake booster (3) which can be actuated either by means of a brake pedal (1) or by means of an electronic control unit (7) as a function of the driver's request, wherein means are provided for decoupling a force-transmitting connection between the brake pedal (1) and the brake booster (3) in the brake-by-wire operating mode,
b) a master brake cylinder (4) which is arranged downstream of the brake booster (3),
c) means for detecting a driver deceleration request (6), and
d) a pedal travel simulator (2) interacting with the brake pedal (1), by means of which pedal travel simulator (2) a restoring force which acts on the brake pedal (1) can be simulated independently of an actuation of the brake booster (3) in the brake-by-wire operating mode and which can be activated in the brake-by-wire operating mode when the force-transmitting connection between the brake pedal (1) and the brake booster (3) is decoupled, and can be deactivated outside the brake-by-wire operating mode,
**characterized in that** the activation and deactivation of the pedal travel simulator (2) are carried out by electrohydraulic means which are formed by a hydraulic cylinder-piston arrangement (40, 56/60, 82), which can be shut off by means of electromagnetically, pneumatically or electropneumatically actuatable valve (47, 62, 66, 67, 73, 86), and **in that** the pedal travel simulator (2) has a moveable simulator unit (56) which receives at least one simulator spring (41, 49, 50, 52, 53, 57, 58, 78) and has or forms a support face (43, 56, 73, 80) for the simulator spring, wherein the support face (43, 56, 73, 80) is secured in the brake-by-wire operating mode by the electrohydraulic means, directly or with the intermediate connection of a force-transmitting element (44) or a two-armed lever (79) which is mounted so as to be rotatable to a limited degree, so that the simulator unit (56) cannot be pivoted and the simulator spring (41, 49, 50, 52, 53, 57, 58, 78) can be compressed or bent, and outside the brake-by-wire operating mode it is released, so that the simulator unit (56) can be pivoted and the simulator spring (41, 49, 50, 52, 53, 57, 58, 78) cannot be compressed or bent.

12. Brake actuating unit according to Claim 11, **characterized in that** the electrohydraulic means can be driven by the electronic control unit (7).

13. Brake actuating unit according to Claim 11 or 12, wherein the pedal travel simulator has at least one simulator spring, **characterized in that** the force-transmitting element (44), against which a support face (42) for the simulator spring (41) bears, is provided between a piston (43) of the cylinder-piston arrangement (40) and the simulator spring (41).

14. Brake actuating unit according to Claim 13, **characterized in that** the piston-cylinder arrangement (40) and the force-transmitting element (44) are arranged radially offset with respect to the axis of the brake booster (3).

15. Brake actuating unit according to Claim 14, **characterized in that** the piston-cylinder arrangement (40) can be arranged in the engine compartment of the motor vehicle.

16. Brake actuating unit according to one of Claims 13 to 15, **characterized in that** the piston-cylinder arrangement (40) has a restoring spring (15) which prestresses the force-transmitting element (44) counter to the direction of actuation of the brake pedal (1).

17. Brake actuating unit according to one of Claims 13 to 16, **characterized in that** the brake booster (3) is a pneumatic brake booster which has at least one force-transmitting bolt (43) which extends through the booster housing of said brake booster and is provided with a through-hole which receives the force-transmitting element (44).

18. Brake actuating unit according to one of Claims 13 to 17, **characterized in that** the simulator spring (41) is embodied as at least one leaf spring.

19. Brake actuating unit according to one of Claims 13 to 17, **characterized in that** the pedal travel simulator (2) is embodied as at least one compression spring (52, 53) which is clamped in between the brake pedal (1) and an angular lever (42) which is mounted so as to be rotatable to a limited degree coaxially with respect to the brake pedal (1) and is supported on the force-transmitting element (44).

20. Brake actuating unit according to Claim 11 or 12, **characterized in that** the simulator spring (49, 50) is arranged in the cylinder-piston arrangement (40) and is supported on the piston (43) of the cylinder-piston arrangement (40).

21. Brake actuating unit according to Claim 20, **characterized in that** a means (51) is provided for sensing the position of the piston (43).

22. Brake actuating unit according to one of Claims 13 to 17, **characterized in that** the simulator spring is received by a simulator unit (14) which is arranged radially offset with respect to the axis of the brake booster (3).

23. Brake actuating unit according to Claim 11 or 12, **characterized in that** the simulator spring (57, 58) is received by a simulator unit (56) which is arranged in the force flux between the brake pedal (1) and the brake booster (3), preferably coaxially with respect to the latter.

24. Brake actuating unit according to Claim 23, **characterized in that** the simulator unit (56) is embodied as a hydraulic piston and forms a hydraulic space (60) which can be shut off in a component (59) which engages radially around at least the simulator unit (56).

25. Brake actuating unit according to Claim 24, **characterized in that** the hydraulic space (60) is connected to one of the pressure spaces of the master brake cylinder (4) or to a pressure medium reservoir container (5) which is assigned to the master brake cylinder (4).

26. Brake actuating unit according to Claim 24, **characterized in that** the hydraulic space (60) is connected to a low-pressure accumulator (65).

27. Brake actuating unit according to Claim 25, **characterized in that** the component (59) is embodied as an adapter which engages radially at least partially around the brake booster (3) and which serves to supply the air to the brake booster (3) from the engine compartment of the vehicle.

28. Brake actuating unit according to one of Claims 24 to 27, **characterized in that** the hydraulic space (60) can be shut off by means of the electromagnetically, electropneumatically or pneumatically actuatable valve (62, 66, 67).

29. Brake actuating unit according to Claim 11 or 12, **characterized in that** the pedal travel simulator (2) is formed by a hydraulic master cylinder (68) which can be actuated by means of the brake pedal (1) and by a hydraulic slave cylinder (69) which is arranged downstream of the master cylinder (68) and the piston (71) thereof is prestressed by the simulator spring (72), wherein the slave cylinder (69) is connected to a low-pressure accumulator (74) via a connection which can be shut off by means of a valve (73).

30. Brake actuating unit according to Claim 29, **characterized in that** the pedal travel simulator (2) is embodied in an adapter (75) which engages radially at least partially around the brake booster (3) and which serves to supply the air to the brake booster (3) from the engine compartment of the vehicle.

31. Brake actuating unit according to Claim 29 or 30, **characterized in that** means (77) are provided for sensing the position of the slave cylinder piston (71).

32. Brake actuating unit according to Claim 29, 30 or 31, **characterized in that** means (76) are provided for sensing the pressure which is present in the slave cylinder (69).

33. Brake actuating unit according to Claim 11 or 12, **characterized in that** the pedal travel simulator (2) is formed by a simulator spring (78) which is clamped in between the brake pedal (1) and the two-armed lever (79) which is mounted so as to be rotatable to a limited degree, and the first arm (80) of which forms the support face for the simulator spring (78) and the second arm (81) of which interacts with a hydraulic piston (83) of a piston-cylinder arrangement (82), the pressure space (84) of which is connected to a hydraulic low-pressure accumulator (85) via a hydraulic connection which can be shut off.

34. Brake actuating unit according to Claim 33, **characterized in that** the first arm (80) has a brakethrough (88) which, when the brake booster (3) is actuated outside the brake-by-wire operating mode, engages at least partially around the control housing of the brake booster (3).

35. Brake actuating unit according to Claim 33 or 34, **characterized in that** the two-armed lever (79) is mounted offset coaxially with the brake pedal (1) or with respect to the brake pedal (1).

36. Brake actuating unit for actuating a motor vehicle brake system of the brake-by-wire type, which is composed of
a) a brake booster (3) which can be actuated either by means of a brake pedal (1) or by means of an electronic control unit (7) as a function of the driver's request, wherein means are provided for decoupling a force-transmitting connection between the brake pedal (1) and the brake booster (3) in the brake-by-wire operating mode,
b) a master brake cylinder (4) which is arranged downstream of the brake booster (3),
c) means for detecting a driver deceleration request (6), and
d) a pedal travel simulator (2) interacting with the brake pedal (1), by means of which pedal travel simulator (2) a restoring force which acts on the brake pedal (1) can be simulated independently of an actuation of the brake booster (3) in the break-by-wire operating mode and which can be activated in the brake-by-wire operating mode when the force-transmitting connection between the brake pedal (1) and the brake booster (3) is decoupled, and can be deactivated outside the brake-by-wire operating mode,
**characterized in that** the activation and deactivation of the pedal travel simulator (2) are carried out by means which are activated by underpressure and which are formed by an arresting element (97) which can be activated by means of an underpressure socket (98), and **in that** the pedal travel simulator (2) has a moveable simulator unit (90) which receives at least one simulator spring (91, 92) and has or forms a support face for the simulator spring (91, 92), wherein the support face is secured in the brake-by-wire operating mode by the pneumatically actuatable means, so that the simulator unit (90) cannot be displaced and the simulator spring (91, 92) can be compressed or bent, and outside the brake-by-wire operating mode it is released, so that the simulator unit (90) can be displaced and the simulator spring (91, 92) cannot be compressed or bent.

37. Brake actuating unit according to Claim 36, **characterized in that** the means which can be actuated by underpressure can be actuated by an underpressure source which is provided in the vehicle.

38. Brake actuating unit according to Claim 36, **characterized in that** the pedal travel simulator (2) is arranged in the force flux between the brake pedal (1) and the brake booster (3), preferably coaxially with respect to the latter.

39. Brake actuating unit according to Claim 38, **characterized in that** a cylindrical component (90) is provided which receives at least partially a control housing of the brake booster (3), which contains a pneumatic control valve, the simulator unit (90) and a restoring spring (94) which prestresses the simulator unit (90) counter to its direction of actuation.

40. Brake actuating unit according to one of the preceding claims, **characterized in that** means are provided for generating a hysteresis.

41. Brake actuating unit according to Claim 40, **characterized in that** the means (19, 20, 99, 100, 101) for generating the hysteresis are embodied in such a way that as the rising stroke of the pedal travel simulator (2) progresses friction forces, which counteract the actuation force acting on the brake pedal (1), are generated in addition to the force of the simulator spring (17, 18, 78).

42. Brake actuating unit according to Claim 41, **characterized in that** the means for generating the hysteresis are formed by a force-transmitting lever (99) which is connected to the brake pedal (1), and by a friction element (100) which bears against the force-transmitting lever (99) under the effect of the simulator spring (78) and interacts with a friction face (101).

43. Brake actuating unit according to Claim 42, **characterized in that** the force-transmitting lever (99) and the friction element (100) have oblique bearing faces (105, 106) which are embodied in such a way that during the actuation of the pedal travel simulator (2) a force component is produced which presses the friction element (100) against the friction face (101).

44. Brake actuating unit according to Claim 43, **characterized in that** the friction element (100) is arranged on a transmission lever (104) which is supported on the force-transmitting lever (99) in such a way that the force component which is produced during the actuation of the pedal travel simulator (2) and which presses the friction element (100) against the friction face (101) is amplified.

45. Brake actuating unit according to Claim 42 or 43, **characterized in that** the means for generating the hysteresis are arranged in a housing (103) which is pivotably mounted coaxially with respect to the brake pedal (1), on the rotational axis thereof, wherein the housing (103) has an arm (102) which is supported on the means for activating and deactivating the pedal travel simulator (2).

46. Brake actuating unit according to one of Claims 33 to 35, **characterized in that** means (89, 110, 95) are provided for checking the mobility of the piston (83) of the piston-cylinder arrangement (82).

47. Brake actuating unit according to Claim 46, **characterized in that** the means are formed by a tractive-force-transmitting connection (89) between the brake pedal (1) and the brake booster (3) as well as a sensor device (95) which detects the travel of the piston (83).

48. Brake actuating unit according to Claim 46, **characterized in that** the means are formed by a drive unit (110), which permits actuation of the piston (83) of the piston-cylinder arrangement (82) independently of the brake pedal (1), and by a sensor device (95) which detects the travel of the piston (83).

49. Brake actuating unit according to Claim 48, **characterized in that** the drive unit (110) is embodied as an electromechanical or pneumatic drive unit.

50. Brake actuating unit according to one of the preceding claims, **characterized in that** the brake pedal (1) is arranged in an adjustable fashion.

## Revendications

1. Unité d'actionnement de frein destinée à actionner une installation de freinage de véhicule automobile du type "freinage par fil", formée de
a) un amplificateur (3) de force de freinage apte à être actionné en fonction des souhaits du conducteur à la fois au moyen d'une pédale de frein (1) et au moyen d'une unité électronique de commande (7), des moyens de découplage de la liaison de transfert de force entre la pédale de frein (1) et l'amplificateur (3) de force de freinage étant prévus en mode de fonctionnement "freinage par fil",
b) un cylindre principal de frein (4) raccordé en aval de l'amplificateur (3) de force de freinage,
c) des moyens de détection du souhait (6) de ralentissement par le conducteur ainsi que de
d) un simulateur (2) de course de pédale qui coopère avec la pédale de frein (1), par lequel, en mode de fonctionnement "freinage par fil", une force de rappel qui agit sur la pédale de frein (1) de manière indépendante de l'actionnement par l'amplificateur (3) de force de freinage peut être simulée, qui en mode de fonctionnement "freinage par fil" peut être branché lorsque la liaison de transfert de force entre la pédale de frein (1) et l'amplificateur de freinage (3) est découplée et qui en dehors du mode de fonctionnement "freinage par fil", peut être débranché,
**caractérisée en ce que**
le branchement et le débranchement du simulateur (2) de course de pédale s'effectuent par des moyens électromécaniques qui sont formés d'un électroaimant (25, 25', 25") et d'un anneau d'un levier pivotant (24) réalisé en un matériau ferromagnétique ou d'un élément de blocage (31, 38) qui peut être actionné au moyen de l'électroaimant (25', 25"),
**en ce que** le simulateur (2) de course de pédale présente une unité mobile de simulation (14, 14') qui reprend au moins un ressort (17, 18, 32, 33, 34) de simulateur et présente ou forme une surface d'appui (22) du ressort (17, 18, 32, 33, 34) de simulateur,
**en ce qu'**en mode de fonctionnement de freinage par fil, la surface d'appui (22) est maintenue par des moyens électromagnétiques de telle sorte que l'unité de simulation (14, 14') ne puisse coulisser et que le ressort (17, 18, 32, 33, 34) de simulateur puisse être comprimé ou déformé et
**en ce qu'**en dehors du mode de fonctionnement de freinage par fil, la surface d'appui est libérée de telle sorte que l'unité de simulation (14, 14') puisse être déplacée et que le ressort (17, 18, 32, 33, 34) du simulateur ne puisse être comprimé ou déformé.

2. Unité d'actionnement de frein selon la revendication 1, **caractérisée en ce que** les moyens électromécaniques peuvent être commandés par l'unité électronique de commande (7).

3. Unité d'actionnement de frein selon la revendication 1, **caractérisée en ce que** le levier pivotant (24) est monté de manière à pouvoir tourner de manière limitée.

4. Unité d'actionnement de frein selon l'une des revendications 1 à 3, **caractérisée en ce que** le levier pivotant (24) est monté en un point (P) décalé radialement par rapport à l'axe longitudinal de l'unité de simulation (14).

5. Unité d'actionnement de frein selon l'une des revendications 1 à 4, **caractérisée en ce que** le levier pivotant est configuré comme levier de renforcement de force.

6. Unité d'actionnement de frein selon l'une des revendications 1 à 5, **caractérisée en ce que** le simulateur (2) de course de pédale n'est pas disposé en correspondance mécanique entre la pédale de frein (1) et l'amplificateur (3) de force de freinage.

7. Unité d'actionnement de frein selon la revendication 1, **caractérisée en ce qu'**elle présente un composant cylindrique (30) qui reprend au moins une partie d'un boîtier de commande (29) de l'amplificateur (3) de force de freinage, le boîtier contenant une soupape pneumatique de commande, l'unité de simulation (14') ainsi qu'un ressort de rappel (15') qui précontraint l'unité de simulation (14') en opposition à sa direction d'actionnement.

8. Unité d'actionnement de frein selon les revendications 1 ou 2, **caractérisée en ce que** le ressort de simulateur est configuré sous la forme d'au moins une lame de ressort (32, 33, 34) qui est serrée dans un levier à genouillère (35) monté à rotation limitée coaxialement à la pédale de frein (1) et **en ce que** les moyens électromécaniques sont formés par un bras (36) du levier à genouillère (35) ainsi que par l'élément d'arrêt (38) qui peut être actionné au moyen de l'électroaimant (25") et qui empêche un déplacement du levier à genouillère (35) en mode de fonctionnement "freinage par fil".

9. Unité d'actionnement de frein selon la revendication 8, **caractérisée en ce que** le levier à genouillère (35) est doté d'un moyen élastique d'amortissement (39) qui sert de butée pour le ressort (32-34) du simulateur et garantit une ligne caractéristique progressive du ressort du simulateur.

10. Unité d'actionnement de frein selon la revendication 7, **caractérisée en ce que** le simulateur (2) de course de pédale est disposé en correspondance mécanique entre la pédale de frein (1) et l'amplificateur (3) de force de freinage et de préférence coaxialement par rapport à ce dernier.

11. Unité d'actionnement de frein destinée à actionner une installation de freinage de véhicule automobile du type "freinage par fil", formée de
a) un amplificateur (3) de force de freinage apte à être actionné en fonction des souhaits du conducteur à la fois au moyen d'une pédale de frein (1) et au moyen d'une unité électronique de commande (7), des moyens de découplage de la liaison de transfert de force entre la pédale de frein (1) et l'amplificateur (3) de force de freinage étant prévus en mode de fonctionnement "freinage par fil",
b) un cylindre principal de frein (4) raccordé en aval de l'amplificateur (3) de force de freinage,
c) des moyens de détection du souhait (6) de ralentissement par le conducteur ainsi que de
d) un simulateur (2) de course de pédale qui coopère avec la pédale de frein (1), par lequel, en mode de fonctionnement "freinage par fil", une force de rappel qui agit sur la pédale de frein (1) de manière indépendante de l'actionnement par l'amplificateur (3) de force de freinage peut être simulée, qui en mode de fonctionnement "freinage par fil" peut être branché lorsque la liaison de transfert de force entre la pédale de frein (1) et l'amplificateur de freinage (3) est découplée et qui en dehors du mode de fonctionnement "freinage par fil", peut être débranché, **caractérisée en ce que**
le branchement et le débranchement du simulateur (2) de course de pédale s'effectue par des moyens électrohydrauliques qui sont formés par un système hydraulique (40, 56/60, 82) à cylindre et piston qui peut être bloqué au moyen d'une soupape (47, 62, 66, 67, 73, 86) qui peuvent être actionnés par des moyens électromagnétiques, pneumatiques ou électropneumatiques,
**en ce que** le simulateur (2) de course de pédale présente une unité mobile de simulation (56) qui reprend au moins un ressort de simulateur (41, 49, 50, 52, 53, 57, 58, 78) et présente ou forme une surface d'appui (43, 56, 71, 80) pour le ressort de simulateur,
**en ce qu'**en mode de fonctionnement de freinage par fil, la surface d'appui (43, 56, 71, 80) est maintenue directement ou par l'intermédiaire d'un organe (44) de transfert de force ou d'un levier (79) à deux bras monté à rotation limitée par les moyens électrohydrauliques de telle sorte que l'unité de simulation (56) ne puisse pivoter et que le ressort de simulateur (41, 49, 50, 52, 53, 57, 58, 78) puisse être comprimé ou déformé et
**en ce qu'**en dehors du mode de fonctionnement de freinage par fil, la surface d'appui est libérée de telle sorte que l'unité de simulation (56) puisse pivoter et que le ressort de simulateur (41, 49, 50, 52, 53, 57, 58, 78) ne puisse être comprimé ou déformé.

12. Unité d'actionnement de frein selon la revendication 11, **caractérisée en ce que** les moyens électrohydrauliques peuvent être commandés par l'unité électronique de commande (7).

13. Unité d'actionnement de frein selon les revendications 11 ou 12, dans laquelle le simulateur de course de pédale présente au moins un ressort de simulateur, **caractérisée en ce que** l'organe (44) de transfert de force sur lequel repose une surface d'appui (42) du ressort de simulateur (41) est prévu entre un piston (43) du système (40) à cylindre et piston et le ressort de simulateur (41).

14. Unité d'actionnement de frein selon la revendication 13, **caractérisée en ce que** le système (40) à piston et cylindre ainsi que l'organe (44) de transfert de force sont décalés radialement par rapport à l'axe de l'amplificateur (3) de force de freinage.

15. Unité d'actionnement de frein selon la revendication 14, **caractérisée en ce que** le système (40) à piston et cylindre peut être disposé dans l'espace prévu pour le moteur du véhicule automobile.

16. Unité d'actionnement de frein selon l'une des revendications 13 à 15, **caractérisée en ce que** le système (40) à piston et cylindre présente un ressort de rappel (15) qui précontraint l'organe (44) de transfert de force dans la direction opposée à la direction d'actionnement de la pédale de frein (1).

17. Unité d'actionnement de frein selon l'une des revendications 13 à 16, **caractérisée en ce que** l'amplificateur (3) de force de freinage est un amplificateur pneumatique de force de freinage qui présente au moins un goujon (45) de transfert de force qui traverse son boîtier d'amplificateur et qui est doté d'un alésage de passage qui reprend l'organe (44) de transfert de force.

18. Unité d'actionnement de frein selon l'une des revendications 13 à 17, **caractérisée en ce que** le ressort de simulateur (41) présente la forme d'au moins une lame de ressort.

19. Unité d'actionnement de frein selon l'une des revendications 13 à 17, **caractérisée en ce que** le simulateur (2) de course de pédale présente la forme d'au moins un ressort de compression (52, 53) serré entre la pédale de frein (1) et un levier à genouillère (42) monté à rotation limitée coaxialement à la pédale de frein (1) et qui s'appuie sur l'organe (44) de transfert de force.

20. Unité d'actionnement de frein selon les revendications 11 ou 12, **caractérisée en ce que** le ressort de simulateur (49, 50) est disposé dans le système (40) à cylindre et piston et s'appuie sur le piston (43) du système (40) à cylindre et piston.

21. Unité d'actionnement de frein selon la revendication 20, **caractérisée en ce qu'**elle présente un moyen (51) de détection de la position du piston (43).

22. Unité d'actionnement de frein selon l'une des revendications 13 à 17, **caractérisée en ce que** le ressort de simulateur est repris par une unité de simulation (14) décalée radialement par rapport à l'axe de l'amplificateur (3) de force de freinage.

23. Unité d'actionnement de frein selon les revendications 11 ou 12, **caractérisée en ce que** le ressort de simulateur (57, 58) est repris par une unité de simulation (56) qui est disposée en correspondance mécanique entre la pédale de frein (1) et l'amplificateur (3) de force de freinage, de préférence coaxialement par rapport à ce dernier.

24. Unité d'actionnement de frein selon la revendication 23, **caractérisée en ce que** l'unité de simulation (56) est configurée comme piston hydraulique et forme un espace hydraulique (60) apte à être bloqué dans un composant (59) qui chevauche radialement au moins l'unité de simulation (56).

25. Unité d'actionnement de frein selon la revendication 24, **caractérisée en ce que** l'espace hydraulique (60) est raccordé à l'un des espaces sous pression du cylindre principal de frein (4) ou à un réservoir (5) de fluide comprimé associé au cylindre principal de frein (4).

26. Unité d'actionnement de frein selon la revendication 24, **caractérisée en ce que** l'espace hydraulique (60) est raccordé à une réserve (65) à basse pression.

27. Unité d'actionnement de frein selon la revendication 25, **caractérisée en ce que** le composant (59) a la forme d'un adaptateur qui chevauche radialement au moins une partie de l'amplificateur (3) de force de freinage et qui sert à amener l'air depuis l'espace prévu pour le moteur du véhicule jusqu'à l'amplificateur (3) de force de freinage.

28. Unité d'actionnement de frein selon l'une des revendications 24 à 27, **caractérisée en ce que** l'espace hydraulique (60) peut être bloqué au moyen de la soupape (62, 66, 67) actionnée par voir électromagnétique, électropneumatique ou pneumatique.

29. Unité d'actionnement de frein selon les revendications 11 ou 12, **caractérisée en ce que** le simulateur (2) de course de pédale est formé par un cylindre hydraulique (68) actionné au moyen de la pédale de frein (1) ainsi que par un cylindre hydraulique récepteur (69) raccordé en aval du cylindre émetteur (68) et dont le piston (71) est précontraint par le ressort de simulateur (72), le cylindre récepteur (69) étant raccordé à une réserve à basse pression (74) au moyen d'une liaison qui peut être fermée par une soupape (73).

30. Unité d'actionnement de frein selon la revendication 29, **caractérisée en ce que** le simulateur (2) de course de pédale est configuré sous la forme d'un adaptateur (75) qui chevauche radialement au moins une partie de l'amplificateur (3) de force de freinage et qui sert à apporter l'air depuis l'espace prévu pour le moteur du véhicule jusque dans l'amplificateur (3) de force de freinage.

31. Unité d'actionnement de frein selon les revendications 29 ou 30, **caractérisée en ce qu'**il présente des moyens (77) de détection de la position du piston (71) du cylindre récepteur.

32. Unité d'actionnement de frein selon les revendications 29, 30 ou 31, **caractérisée en ce qu'**elle présente des moyens (76) de détection de la pression qui règne dans le cylindre récepteur (69).

33. Unité d'actionnement de frein selon les revendications 11 ou 12, **caractérisée en ce que** le simulateur (2) de course de pédale est formé par un ressort de simulateur (78) serré entre la pédale de frein (1), le levier (79) à deux bras monté à rotation limitée, dont le premier bras (80) forme la surface d'appui du ressort de simulateur (78) et dont le deuxième bras (81) coopère avec le piston hydraulique (83) d'un système (82) à piston et cylindre dont l'espace sous pression (84) est raccordé à une réserve hydraulique (85) à basse pression par une liaison hydraulique apte à être fermée.

34. Unité d'actionnement de frein selon la revendication 33, **caractérisée en ce que** le premier bras (80) présente une perforation (88) qui en dehors du mode de fonctionnement "freinage par fil", chevauche au moins une partie du boîtier de commande de l'amplificateur (3) de force de freinage lorsque l'amplificateur (3) de force de freinage est actionné.

35. Unité d'actionnement de frein selon les revendications 33 ou 34, **caractérisée en ce que** le levier (79) à deux bras est monté coaxialement par rapport à la pédale de frein (1) ou en position décalée par rapport à la pédale de frein (1).

36. Unité d'actionnement de frein destinée à actionner une installation de freinage de véhicule automobile du type "freinage par fil", formée de
a) un amplificateur (3) de force de freinage apte à être actionné en fonction des souhaits du conducteur à la fois au moyen d'une pédale de frein (1) et au moyen d'une unité électronique de commande (7), des moyens de découplage de la liaison de transfert de force entre la pédale de frein (1) et l'amplificateur (3) de force de freinage étant prévus en mode de fonctionnement "freinage par fil",
b) un cylindre principal de frein (4) raccordé en aval de l'amplificateur (3) de force de freinage,
c) des moyens de détection du souhait (6) de ralentissement par le conducteur ainsi que de
d) un simulateur (2) de course de pédale qui coopère avec la pédale de frein (1), par lequel, en mode de fonctionnement "freinage par fil", une force de rappel qui agit sur la pédale de frein (1) de manière indépendante de l'actionnement par l'amplificateur (3) de force de freinage peut être simulée, qui en mode de fonctionnement "freinage par fil" peut être branché lorsque la liaison de transfert de force entre la pédale de frein (1) et l'amplificateur de freinage (3) est découplée et qui en dehors du mode de fonctionnement "freinage par fil", peut être débranché,
**caractérisée en ce que**
le branchement et le débranchement du simulateur (2) de course de pédale s'effectuent par des moyens de dépression qui sont formés d'un élément de blocage (97) qui peut être actionné au moyen d'un boîtier de dépression (98),
**en ce que** le simulateur (2) de course de pédale présente une unité mobile de simulation (90) qui reprend au moins un ressort de simulateur (91, 92) et présente ou forme une surface d'appui pour le ressort de simulateur (91, 92),
**en ce qu'**en mode de fonctionnement de freinage par fil, la surface d'appui est maintenue par les moyens actionnés pneumatiquement de telle sorte que l'unité de simulation (90) ne puisse pas coulisser et que le ressort de simulateur (91, 92) puisse être comprimé ou déformé et
**en ce qu'**en dehors du mode de fonctionnement en freinage par fil, la surface d'appui est libérée de telle sorte que l'unité de simulation (90) puisse coulisser et que le ressort de simulateur (91, 92) ne puisse être comprimé ou déformé.

37. Unité d'actionnement de frein selon la revendication 36, **caractérisée en ce que** les moyens actionnés par dépression peuvent être actionnés par une source de dépression prévue dans le véhicule.

38. Unité d'actionnement de frein selon la revendication 36, **caractérisée en ce que** le simulateur (2) de course de pédale est disposé en correspondance mécanique entre la pédale de frein (1) et l'amplificateur (3) de force de freinage et de préférence coaxialement par rapport à ce dernier.

39. Unité d'actionnement de frein selon la revendication 38, **caractérisée en ce qu'**elle présente un composant cylindrique (90) qui reprend au moins une partie du boîtier de commande de l'amplificateur (3) de force de freinage, qui contient une soupape pneumatique de commande, l'unité de simulation (90) ainsi qu'un ressort de rappel (94) qui précontraint l'unité de simulation (90) dans la direction opposée à la direction de son actionnement.

40. Unité d'actionnement de frein selon l'une des revendications précédentes, **caractérisée en ce qu'**il présente des moyens de formation d'une hystérèse.

41. Unité d'actionnement de frein selon la revendication 40, **caractérisée en ce que** les moyens (19, 20, 99, 100, 101) de formation d'une hystérèse sont configurés de telle sorte que lorsque la course du simulateur (2) de course de pédale augmente, des forces de frottement sont exercées en plus de la force du ressort de simulateur (17, 18, 78) et s'opposent à la force d'actionnement qui agit sur la pédale de frein (1).

42. Unité d'actionnement de frein selon la revendication 41, **caractérisée en ce que** les moyens de formation de l'hystérèse sont formés par un levier (99) de transfert de force relié à la pédale de frein (1) ainsi que par un organe de frottement (100) appliqué sur le levier (99) de transfert de force sous l'action du ressort de simulateur (78) et coopérant avec une surface de frottement (101).

43. Unité d'actionnement de frein selon la revendication 42, **caractérisée en ce que** le levier de transfert de force (99) ainsi que l'organe de frottement (100) présentent des surfaces obliques de pose (105, 106) configurées de telle sorte que lorsque le simulateur (2) de course de pédale est actionné, il apparaisse une composante de force qui repousse l'organe de frottement (100) contre la surface de frottement (101).

44. Unité d'actionnement de frein selon la revendication 43, **caractérisée en ce que** l'organe de frottement (100) est disposé sur un levier (104) de renforcement qui s'appuie sur le levier (99) de transfert de force de manière à produire un renforcement de la composante de force exercée lors de l'actionnement du simulateur (2) de course de pédale et qui repousse l'organe de frottement (100) contre la surface de frottement (101).

45. Unité d'actionnement de frein selon les revendications 42 ou 43, **caractérisée en ce que** les moyens de formation de l'hystérèse sont disposés dans un boîtier (103) monté à pivotement coaxialement à la pédale de frein (1) et sur son axe de rotation, le boîtier (103) présentant un bras (102) qui s'appuie sur les moyens de branchement et de débranchement du simulateur (2) de course de pédale.

46. Unité d'actionnement de frein selon l'une des revendications 33 à 35, **caractérisée en ce qu'**elle présente des moyens (89, 110, 95) de vérification de la mobilité du piston (83) du système (82) à piston et cylindre.

47. Unité d'actionnement de frein selon la revendication 46, **caractérisée en ce que** les moyens sont formés par une liaison (89) de transfert de force de traction entre la pédale de frein (1) et l'amplificateur (3) de force de freinage ainsi que par un dispositif de détection (95) qui saisit la course du piston (83).

48. Unité d'actionnement de frein en ce que les moyens sont formés par une unité d'entraînement (110) qui permet d'actionner le piston (83) du système (82) à piston et cylindre indépendamment de la pédale de frein (1) ainsi que par un dispositif de détection (95) qui saisit la course du piston (83).

49. Unité d'actionnement de frein selon la revendication 48, **caractérisée en ce que** l'unité d'entraînement (110) est configurée comme unité d'entraînement électromécanique ou pneumatique.

50. Unité d'actionnement de frein selon l'une des revendications précédentes, **caractérisée en ce que** la pédale de frein (1) est réglable.
